(19) Europäisches Patentamt / European Patent Office / Office européen des brevets

(11) **EP 4 779 280 A1**

(12) **EUROPEAN PATENT APPLICATION**
published in accordance with Art. 153(4) EPC

(43) Date of publication:
**22.07.2026 Bulletin 2026/30**

(21) Application number: **24888315.9**

(22) Date of filing: **02.08.2024**

(51) International Patent Classification (IPC):
*G01L 1/00* (2006.01)

(52) Cooperative Patent Classification (CPC):
**G01L 1/00**

(86) International application number:
**PCT/JP2024/027734**

(87) International publication number:
**WO 2025/100013 (15.05.2025 Gazette 2025/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.11.2023 JP 2023192042**

(71) Applicant: **JFE Steel Corporation**
**Tokyo 100-0011 (JP)**

(72) Inventors:
• **TAMASHIRO, Fumiaki**
 **Tokyo 100-0011 (JP)**
• **ISHIWATARI, Akinobu**
 **Tokyo 100-0011 (JP)**

(74) Representative: **Grünecker Patent- und Rechtsanwälte**
**PartG mbB**
**Leopoldstraße 4**
**80802 München (DE)**

(54) **METHOD FOR TESTING METAL PLATE SHEARING, SYSTEM FOR TESTING METAL PLATE SHEARING, AND METHOD FOR MANUFACTURING METAL PLATE SHEARING MATERIAL**

(57) A metal sheet shearing test method according to the present invention includes a process (P1) of reproducing a process of forming a sheared end 103 of a sheared material 101 by shearing of a test piece 121, and a process (P3) of calculating a residual stress distribution in a sheared end side surface 127 of a sheared end 123 formed by shearing of the test piece 121, in which a strain history and a spin history of the sheared end side surface 127 in a deformation process of the sheared end 123 caused by shearing of the test piece 121 are acquired (S10), incremental update of a stress in the sheared end side surface 127 is performed from the start to the end of deformation of the sheared end 123 for calculation (S20), and the residual stress distribution in the sheared end side surface 127 at the end of deformation is calculated (S30).

FIG.1

(a)
```
START
   ↓
SHEARING REPRODUCTION TEST PROCEDURE ─── P1
   ↓
RESIDUAL STRESS DISTRIBUTION CALCULATION PROCEDURE ─── P3
   ↓
END
```

(b)
```
RESIDUAL STRESS DISTRIBUTION CALCULATION PROCEDURE ─── P3
  DEFORMATION HISTORY ACQUISITION PROCESS ─── S10
    SURFACE DEFORMATION HISTORY ACQUISITION STEP ─── S11
    STRAIN HISTORY ACQUISITION STEP ─── S13
    SPIN HISTORY ACQUISITION STEP ─── S15
  STRESS INCREMENTAL UPDATE PROCESS ─── S20
    ACQUIRED INCREMENTAL STRAIN CALCULATION STEP ─── S21
    ASSUMED INCREMENTAL STRAIN CALCULATION STEP ─── S23
    ACQUIRED INCREMENTAL SPIN CALCULATION STEP ─── S25
    INCREMENTAL STRESS CALCULATION STEP ─── S27
    STRESS INCREMENTAL UPDATE STEP ─── S29
      UPDATE LOCAL STRESS ─── S29a
      FINISH OF STRESS UPDATE AT ALL MEASUREMENT POINTS  NO ─── S29b
        ↓ YES
      FINISH OF DEFORMATION  NO ─── S29c
        YES
  RESIDUAL STRESS DISTRIBUTION CALCULATION PROCESS ─── S30
    STRESS COORDINATE SYSTEM TRANSFORMATION STEP ─── S31
    RESIDUAL STRESS DISTRIBUTION DISPLAY STEP ─── S33
```

EP 4 779 280 A1

**EP 4 779 280 A1**

**Description**

Field

The present invention relates to a metal sheet shearing test method by which residual stress at a sheared end of a sheared material obtained by shearing a metal sheet is calculated, a metal sheet shearing test system, and a manufacturing method for a sheared metal sheet material by which a sheared material obtained by shearing a metal sheet is manufactured.

Background

Sheared materials manufactured by shearing metal sheets are used as blanks for press formed parts (e.g., automobile parts), but residual stress in the sheared materials generated by the shearing is known to affect the fatigue life/fatigue life time and delayed fracture characteristics of the press formed parts. Therefore, it is important to grasp the residual stress in such a sheared material in order to guarantee the fatigue life/fatigue life time and the like of a press formed part using the sheared material.

Conventionally, residual stress in metal sheets is measured using X-rays or supersonic waves, or calculated by measuring strain in deformation process of the metal sheets. Furthermore, prediction thereof is performed by using a finite element analysis during a shearing process. Patent Literature 1 discloses a technique of detecting a diffracted X-ray emitted from a sample irradiated with an X-ray, and non-destructively measuring stress inside the sample on the basis of information of the diffracted X-ray. In addition, Patent Literature 2 discloses a technique of non-destructively measuring residual stress on the basis of sound speed information of a supersonic wave, which is obtained by measuring the supersonic wave generated in a test object (e.g., metal sheet or the like) having been subjected to plastic deformation. Furthermore, Patent Literature 3 discloses a technique of measuring strain of a deformed portion in a deformation process for plastic deformation of a metal sheet to acquire a strain history, and performing incremental update of stress from the start to the end of deformation of the deformed portion on the basis of the acquired strain history to obtain residual stress of the deformed portion.

In addition, the prediction of the residual stress by the finite element analysis in the shearing process is enabled by finite element analysis software generally widely used, and improvement of accuracy in material constitutive laws is advanced in such finite element analyses. For example, a material constitutive law (hereinafter, referred to as "Yoshida-Uemori model (Y-U model)") disclosed in Non Patent Literature 1 contributes to improvement of accuracy in a spring back analysis, which is important for prediction of residual stress in the press formed parts. Furthermore, in Non Patent Literature 2, a fracture condition leading to fracture of a ductile material fractures is presented, modeling is performed to simulate the behavior of the material until the material leads to the fracture.

Citation List

Patent Literature

Patent Literature 1: JP 2002-333409 A
Patent Literature 2: JP 2011-196953 A
Patent Literature 3: JP 6981521 B1

Non Patent Literature

Non Patent Literature 1: F. Yoshida and T. Uemori, International Journal of Mechanical Sciences, 45 (2003), 1687-1702.
Non Patent Literature 2: F. X. C. Andrade, M. Feucht, A. Haufe and F. Neukamm, International Journal of Fracture, 200 (2016), 127-150.

Summary

2

Technical Problem

However, the measurement of the stress using the X-ray disclosed in Patent Literature 1 and the measurement of the residual stress using the supersonic wave disclosed in Patent Literature 2 are each based on the assumption that the sample (the metal sheet or the like) is uniform in a region which the X-ray enters or a region in which the supersonic wave is generated. Therefore, it is difficult for each of these measurement techniques to accurately measure the residual stress of a metal sheet having two or more kinds of phases (e.g., dual phase (DP) steel sheet or the like). In addition, each of the techniques of Patent Literature 1 and Patent Literature 2 measures the residual stress after deformation, disabling measurement of a stress history during deformation.

Furthermore, each of the techniques of Patent Literature 1 and Patent Literature 2 is a technique to determine stress at one specific point in the sample as a measurement target, and repeated measurement of stress at a plurality of points is needed to obtain a residual stress distribution.

In addition, the technique of Patent Literature 3 calculates residual stress generated in a metal sheet having been subjected to plastic deformation on the basis of a coordinate system defined at each position of the metal sheet. Therefore, when the orientation of the coordinate system changes due to rotational deformation of the metal sheet itself during the deformation process, a direction in which the residual stress is generated becomes unclear.

In contrast to the techniques of Patent Literatures 1 to 3 as described above, a method for prediction of the residual stress by using the finite element analysis facilitates calculation of the residual stress distribution. However, input values (shape, material property, deformation characteristic, boundary condition, and the like) given to the finite element analysis software used for the finite element analysis significantly affect a prediction result of residual stress. Therefore, in order to accurately predict the residual stress by the finite element analysis, various input values of the deformation characteristic of a tool that applies plastic deformation, and the boundary condition such as a contact property or sliding characteristic between the metal sheet and the tool, and the like need to be set to more accurate values, in addition to the material property of the metal sheet.

Furthermore, for prediction of the residual stress in the sheared metal sheet material by the finite element analysis, a fracture condition of the metal sheet needs to be incorporated into the finite element analysis. Various fracture criteria, such as a ductile fracture condition proposed by Cockcroft et al., and a fracture condition based on stress triaxiality such as GISSMO disclosed in Patent Literature 2 have been proposed as the fracture condition. However, criteria enabling accurate prediction of fracture in shearing have not yet been established. Furthermore, in general modeling of a fracture phenomenon in the finite element analysis, it is determined whether a fracture condition is satisfied for each element of a finite element analysis model, and an element satisfying the fracture condition is removed from the finite element analysis model. However, upon removal of the element, the mass and energy of the metal sheet (the sheared material) disappear, which may cause a divergence from an actual fracture phenomenon. Therefore, it is very difficult to predict the residual stress generated in a sheared edge of the metal sheet after shearing with high accuracy by the finite element analysis.

The present invention has been made to solve the above problems, and an object of the present invention is to provide a metal sheet shearing test method and a metal sheet shearing test system that are configured to reproduce shearing of a metal sheet to accurately and readily obtain a residual stress in a sheared end formed in a test piece. Furthermore, another object of the present invention is to provide a manufacturing method for a sheared metal sheet material for which appropriate measures are taken to suppress occurrence of tensile residual stress affecting a fatigue life/fatigue life time or delayed fracture characteristics.

Solution to Problem

A metal sheet shearing test method for calculating residual stress in a sheared end of a sheared material obtained by shearing a metal sheet according to the present invention includes: a shearing reproduction test procedure of reproducing a process of forming the sheared end by shearing of a test piece using the metal sheet as a test material; and a residual stress distribution calculation procedure of calculating a residual stress distribution in a sheared end side surface of the sheared end formed in the test piece, wherein the shearing reproduction test procedure includes shearing the test piece, using shearing tools including a punch, a die, and a holder, by relatively moving the punch and the die in a state where the test piece is arranged between the die and the holder, and the residual stress distribution calculation procedure includes a deformation history acquisition process, a stress incremental update process, and a residual stress distribution calculation process, wherein the deformation history acquisition process includes: a surface deformation history acquisition step of setting a plurality of measurement points on the sheared end side surface of the sheared end formed in the test piece, measuring three-dimensional coordinates of each of the plurality of measurement points in a deformation process of the sheared end caused by shearing of the test piece in the shearing reproduction test procedure, and acquiring a surface deformation history of the sheared end side surface from start to end of deformation of the sheared end; a strain history acquisition step of acquiring a strain history of the sheared end side surface in a deformation process of the sheared end, from the acquired surface deformation history of the sheared end side surface; and a spin history acquisition step of acquiring a spin history of the sheared end side surface in the deformation process of the sheared end, from the acquired surface deformation history of the sheared end side surface, the stress incremental update process includes: an acquired incremental strain calculation step of calculating acquired incremental strain from the strain history of the sheared end side surface acquired in the strain history acquisition step; an assumed incremental strain calculation step of calculating assumed incremental strain, assuming a deformation state of the sheared end side surface, the assumed incremental strain being an increment of strain other than the strain for which the strain history is acquired in the strain history acquisition step; an acquired incremental spin calculation step of calculating acquired incremental spin from the spin history acquired in the spin history acquisition step; and an incremental stress calculation step of calculating incremental stress at the plurality of measurement points according to a material constitutive law by using the acquired incremental strain, the assumed incremental strain, and the acquired incremental spin; and a stress incremental update step of performing incremental update of stress in a material coordinate system at each of the plurality of measurement points, from the start to the end of deformation of the sheared end caused by shearing of the test piece, by using the incremental stress calculated for each of the plurality of measurement points, and he residual stress distribution calculation process includes: a stress coordinate system transformation step of converting the stress in the material coordinate system at each of the plurality of measurement points at the end of deformation of the sheared end obtained by incremental update in the stress incremental update step, into a global stress value in a predetermined direction in a global coordinate system, and obtaining the converted global stress value at each of the plurality of measurement points, as the residual stress distribution in the sheared end side surface.

The residual stress distribution calculation process may further include a residual stress distribution display step of displaying the residual stress distribution in the sheared end side surface obtained in the stress coordinate system transformation step.

In the assumed incremental strain calculation step, a deformation state of the sheared end side surface may be assumed from a deformation process of the sheared end caused by shearing of the test piece, and the assumed incremental strain in the sheared end side surface may be calculated based on mechanics of plasticity in the assumed deformation state.

In the assumed incremental strain calculation step, a deformation state of the sheared end side surface may be assumed by a finite element analysis of a deformation process of the sheared end caused by shearing of the test piece, and the assumed incremental strain in the sheared end side surface may be calculated based on the assumed deformation state.

A metal sheet shearing test system for calculating residual stress in a sheared end of a sheared material obtained by shearing a metal sheet according to the present invention includes: a shearing reproduction test apparatus configured to reproduce a process of forming the sheared end by shearing of a test piece using the metal sheet as a test material; and a residual stress distribution calculation device configured to calculate a residual stress distribution in a sheared end side surface of the sheared end formed in the test piece, wherein the shearing reproduction test apparatus includes shearing tools including a punch, a die, and a holder to relatively move the punch and the die in a state where the test piece is arranged between the die and the holder, the shearing reproduction test apparatus being configured to perform shearing of the test piece, and the residual stress distribution calculation device includes a deformation history acquisition unit, a stress incremental update unit, and a residual stress distribution calculation unit, wherein the deformation history acquisition unit includes: a surface deformation history acquisition section configured to measure three-dimensional coordinates in a deformation process of the sheared end caused by shearing of the test piece using the shearing reproduction test apparatus, for a plurality of measurement points set on the sheared end side surface of the sheared end formed in the test piece, and acquires a surface deformation history of the sheared end side surface from start to end of deformation of the sheared end; a strain history acquisition section configured to acquire a strain history of the sheared end side surface in a deformation process of the sheared end, from the acquired surface deformation history of the sheared end side surface; and a spin history acquisition section configured to acquire a spin history of the sheared end side surface in the deformation process of the sheared end, from the acquired surface deformation history of the sheared end side surface, the stress incremental update unit includes: an acquired incremental strain calculation section configured to calculate acquired incremental strain from the strain history of the sheared end side surface acquired by the strain history acquisition section; an assumed incremental strain calculation section configured to calculate assumed incremental strain, assuming a deformation state of the sheared end side surface, the assumed incremental strain being an increment of strain other than the strain for which the strain history is acquired by the strain history acquisition section; an acquired incremental spin calculation section configured to calculate acquired incremental spin from the spin history acquired by the spin history acquisition section; and an incremental stress calculation section configured to calculate incremental stress at each of the plurality of measurement points according to a material constitutive law by using the acquired incremental strain, the assumed incremental strain, and the acquired incremental spin; and a stress incremental update section configured to perform incremental update of stress in a material coordinate system at each of the plurality of measurement points, from the start to the end of deformation of the sheared end caused by shearing of the test piece, by using the incremental stress calculated for each of the plurality of measurement points, and the residual stress distribution calculation unit includes: a stress coordinate system transformation section configured to convert the stress in the material coordinate system at each of the plurality of measurement points at the end of deformation of the sheared end obtained by incremental update by the stress incremental update section, into a global stress value in a predetermined direction in a global coordinate system, and obtains the converted global stress value at each of the plurality of measurement points, as the residual stress distribution in the sheared end side surface.

The residual stress distribution calculation unit may further include a residual stress distribution display section configured to display the residual stress distribution in the sheared end side surface obtained by the stress coordinate system transformation section.

The assumed incremental strain calculation section may be configured to assume a deformation state of the sheared end side surface from a deformation process of the sheared end caused by shearing of the test piece, and calculate the assumed incremental strain in the sheared end side surface based on mechanics of plasticity in the assumed deformation state.

The assumed incremental strain calculation section may be configured to assume a deformation state of the sheared end side surface by a finite element analysis of a deformation process of the sheared end caused by shearing of the test piece, and calculate the assumed incremental strain in the sheared end side surface based on the assumed deformation state.

A manufacturing method for a sheared metal sheet material according to the present invention performs shearing of a metal sheet to manufacture a sheared material and includes: a provisional shear condition setting process of setting a provisional shear condition for performing shearing of the metal sheet; a shearing reproduction test process of reproducing a process of forming a sheared end of the metal sheet by performing shearing of a test piece under the provisional shear condition by the metal sheet shearing test method, and calculating a residual stress distribution in a sheared end side surface based on a surface deformation history of the sheared end side surface of the sheared end formed in the test piece; a tensile residual stress amount determination process of determining whether tensile residual stress in the sheared end side surface is within a predetermined range determined in advance; a provisional shear condition changing process of changing the provisional shear condition when it is determined that the tensile residual stress is out of the predetermined range determined in advance; a repeating process of repeatedly executing the provisional shear condition changing process, the shearing reproduction test process, and the tensile residual stress amount determination process until it is determined that the tensile residual stress is within the predetermined range determined in advance; a shear condition determination process of determining, when it is determined that the tensile residual stress is within the predetermined range determined in advance in the tensile residual stress amount determination process, the determined provisional shear condition, as a shear condition; and a shearing process of performing shearing of the metal sheet under the determined shear condition.

Advantageous Effects of Invention

In the present invention, the process of forming the sheared end of the sheared material obtained by shearing of the metal sheet is reproduced by shearing of the test piece using the metal sheet as a test material, and a surface deformation history of a sheared end side surface in the deformation process of the sheared end formed in the test piece is acquired. Then, on the basis of the acquired surface deformation history of the sheared end side surface, the stress in the sheared end side surface from the start to the end of deformation of the sheared end is obtained by incremental update. This configuration makes it possible to highly accurately and readily obtain the residual stress distribution in the sheared end side surface with the directions of the stress aligned, even when the orientation of the material coordinate system changes at each of the positions of the measurement points in the sheared end side surface due to the shearing of the test piece.

In addition, according to the present invention, evaluation of maximum residual stress (maximum tensile residual stress) from the residual stress distribution obtained for the sheared end side surface of the test piece also makes it possible to determine the presence or absence of a portion that may be a crack initiation point of delayed fracture or fatigue fracture in the sheared edge generated by shearing as well.

Furthermore, according to the present invention, it is possible to acquire a stress distribution history with high accuracy even during deformation of the sheared end caused by shearing of the test piece. In addition, it is possible to accurately and readily calculate the residual stress distribution generated in the sheared end, even for shear deformation or the like followed by fracture of the metal sheet, which is difficult to predict by the finite element analysis.

In addition, in the present invention, obtaining the residual stress distribution in the sheared end side surface of the sheared metal sheet makes it possible to manufacture the sheared metal sheet material for which appropriate measures are taken to suppress generation of the tensile residual stress affecting the fatigue life/fatigue life time or delayed fracture characteristics.

Brief Description of Drawings

[FIG. 1] FIG. 1 is a flowchart illustrating a process procedure in a metal sheet shearing test method according to a first embodiment of the present invention ((a) entire procedure, and (b) residual stress distribution calculation procedure).

[FIG. 2] FIG. 2 is a diagram illustrating a sheared material as a target according to the present invention.

[FIG. 3] FIG. 3 is a graph illustrating a correlation between residual stress in a sheared edge of the sheared material and maximum residual stress in a sheared end side surface ((a) positions of the sheared edge and the sheared end side surface, and (b) a graph illustrating the correlation of the residual stress).

[FIG. 4] FIG. 4 is a diagram illustrating change in orientation of a material coordinate system and a global coordinate system before and after shearing of the metal sheet ((a) before the shearing, and (b) after the shearing).

[FIG. 5] FIG. 5 is a diagram illustrating a configuration of a metal sheet shearing test system according to the first embodiment of the present invention.

[FIG. 6] FIG. 6 is a diagram illustrating a surface deformation history of each measurement point and strain and spin generated in a region formed of three measurement points, on the basis of three-dimensional coordinates before and after deformation caused by shearing, measured at the three measurement points set in a sheared end side surface of a test piece, in the metal sheet shearing test method according to the present first embodiment ((a) before the deformation caused by the shearing, and (b) after the deformation caused by the shearing).

[FIG. 7] FIG. 7 is a flowchart illustrating a process procedure in a manufacturing method for a sheared metal sheet material according to a second embodiment of the present invention.

[FIG. 8] FIG. 8 illustrates diagrams of a shearing tester to obtain residual stress in the sheared end side surface in a deformation process of a sheared end caused by shearing of the test piece, and a shape of the test piece, in a first example ((a) a side view of the shearing tester, (b) a front view of the shearing tester, and (c) the test piece).

[FIG. 9] FIG. 9 is a contour diagram illustrating a residual stress distribution in the sheared end of the test piece subjected to shearing, in the first example.

[FIG. 10] FIG. 10 is a graph illustrating a relationship between distance from the sheared edge on the sheared end of the test piece and residual stress in a sheet thickness direction at a sheet thickness center, in the first example.

[FIG. 11] FIG. 11 illustrates contour diagrams of residual stress distributions in the sheared end side surfaces of the test pieces formed on the basis of a provisional shear condition and a shear condition determined so that the residual stress in the sheared end side surface is within a predetermined range, in a second example ((a) the provisional shear condition, and (b) the shear condition determined so that the residual stress is within the predetermined range).

Description of Embodiments

Prior to descriptions of the embodiments of the present invention, the background to the present invention will be described.

<Background to present invention>

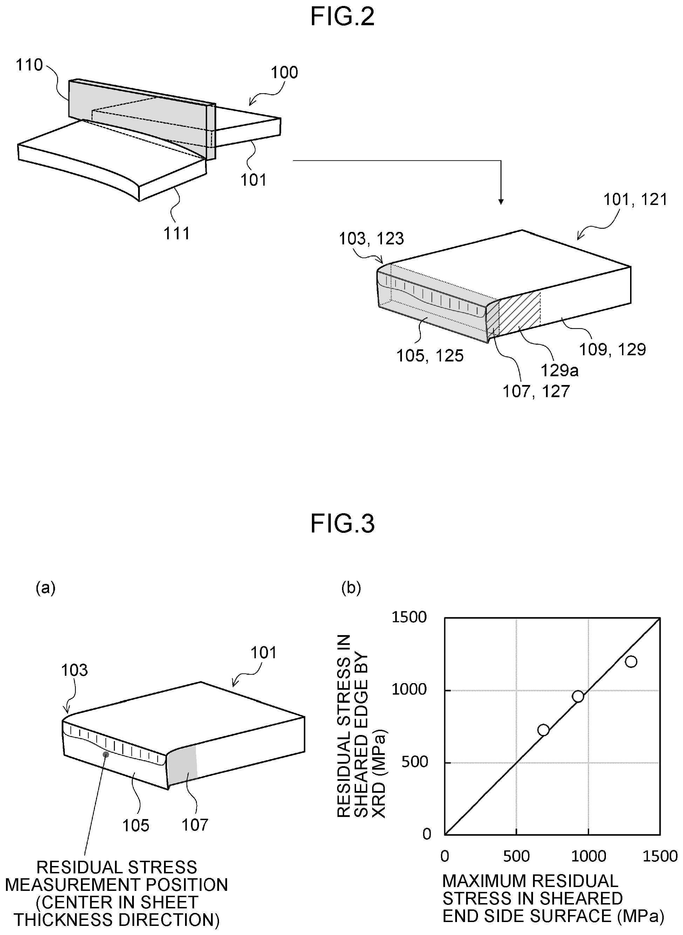

As illustrated in FIG. 2, when a metal sheet 100 is subjected to shearing by a shearing blade 110, the metal sheet is cut into a sheared material 101 used for a product and a scrap material 111 to be discarded, and a sheared end 103 where plastic deformation is generated due to the shearing is formed in the sheared material 101. The sheared end 103 includes a sheared edge 105 that is a surface newly generated by the shearing, and a sheared end side surface 107 that is a part of a sheet side surface 109 of the metal sheet 100 and subjected to deformation by formation of the sheared end 103. The sheared end 103 is within a range of less than 1 mm from the sheared edge 105.

It is known that a crack of fatigue fracture or delayed fracture in a use state of a component (e.g., press formed part) using the sheared material 101 occurs from the sheared edge 105 and a portion having high residual stress leads to an initiation point of the crack.

Therefore, in order to suppress the occurrence of the fatigue fracture or delayed fracture of the sheared material 101, it is important to grasp the residual stress in the sheared edge 105 of the sheared material 101 and to manufacture the sheared material 101 so as to have reduced residual stress. However, as described above, it has been difficult to obtain the residual stress in the sheared edge 105. Therefore, the inventors have intensively studied a method of grasping the residual stress in the sheared edge 105 that leads to a crack initiation point of the fatigue fracture or delayed fracture.

In this study, it was considered that the residual stress in the sheared edge 105 generated by the shearing is related to the residual stress in the sheared end side surface subjected to deformation due to the formation of the sheared end. Therefore, as illustrated in FIG. 3(a), the residual stress at the center in a sheet thickness direction of the sheared edge 105 of the sheared material 101 obtained by shearing the metal sheet 100 was measured by an X-ray diffraction method (XRD), and a relation with the residual stress in the sheared end side surface 107 was examined.

As a result, as illustrated in FIG. 3(b), it was found that the residual stress at the center in the sheet thickness direction of the sheared edge 105 correlates with maximum tensile residual stress (hereinafter, referred to as "maximum residual stress") in the sheared end side surface 107.

Therefore, the inventor considered that if the maximum residual stress can be obtained from a residual stress distribution in the sheared end side surface 107, the correlation will help determination of the presence or absence of the portion leading to the crack initiation point of the fatigue fracture or delayed fracture in the sheared edge 105.

Next, the inventor has studied a method of obtaining the residual stress distribution in the sheared end side surface 107. According to a method disclosed in Patent Literature 3 described above, it is possible to acquire the strain history in the sheet side surface of the deformed portion of the metal sheet subjected to plastic deformation, perform incremental update of the stress from the start to the end of the deformation of the sheet side surface, and obtain the residual stress distribution in the deformed portion. However, this method calculates the residual stress generated at the deformed portion of the metal sheet having been subjected to plastic deformation, on the basis of the coordinate system defined at the position of each measurement point where the strain is measured, and therefore, the change in the orientation of the coordinate system due to the rotational deformation of the metal sheet itself during the deformation process makes the direction in which the residual stress is generated unclear.

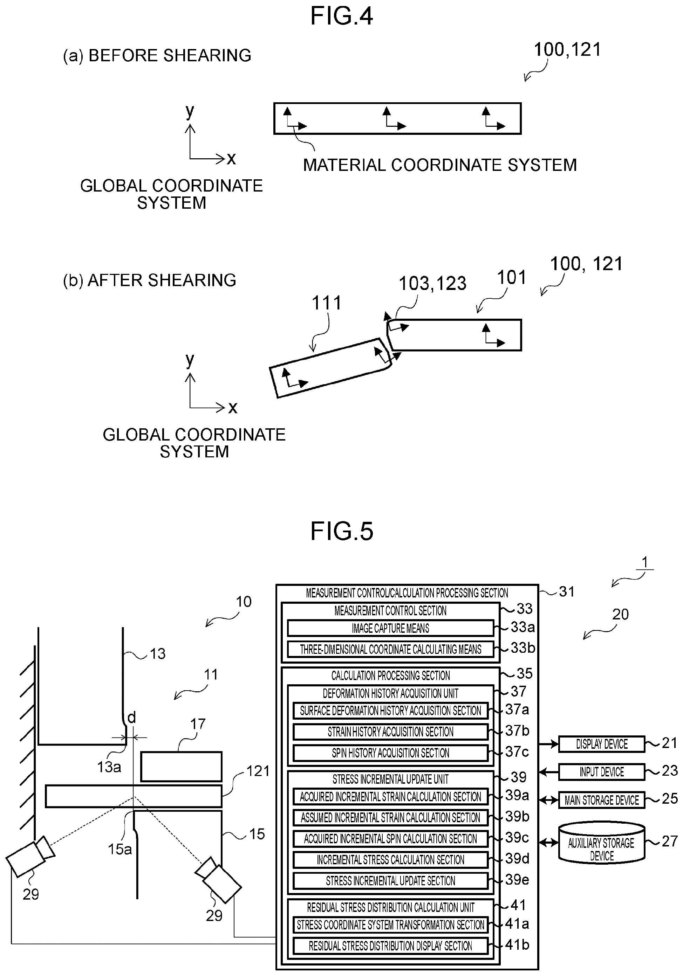

For an example of a change in the orientation of a material coordinate system of the metal sheet having been subjected to plastic deformation, consider the metal sheet 100 to be subjected to shearing as illustrated in FIG. 4. In FIG. 4, (a) illustrates the metal sheet 100 before shearing, and (b) illustrates the metal sheet 100 (the sheared material 101 and the scrap material 111) after shearing. A coordinate system defined at each position of the metal sheet 100 is referred to as the material coordinate system. In contrast, a coordinate system when the metal sheet 100 deformed due to shearing is viewed from outside is referred to as a global coordinate system.

In the metal sheet 100 before shearing, the orientation of the material coordinate system is constant regardless of the position in the metal sheet 100, and coincides with the orientation of the global coordinate system, as illustrated in FIG. 4(a). In contrast, in the sheared material 101 having been deformed due to shearing, the orientation of the material coordinate system differs depending on the difference in position in the sheared material 101, and diverges from the orientation of the global coordinate system, as illustrated in FIG. 4(b).

In other words, the orientation of the material coordinate system changes according to the deformation generated in the sheared material 101, and further, the orientation of the material coordinate system differs depending on the position in the sheared material 101. In contrast, the orientation of the global coordinate system, unlike the material coordinate system, is not changed by deformation of the sheared material 101 caused by shearing, and is constant regardless of the position of the sheared material 101.

Furthermore in order to calculate the residual stress distribution in the sheared material deformed by the shearing, residual stress at a plurality of positions in the sheared material 101 needs to be calculated. However, the residual stress calculated by the method disclosed in Patent Literature 3 is calculated according to the material coordinate system of a position where the stress is calculated. Therefore, upon calculation of the residual stress at the plurality of positions, the residual stress different in direction depending on the positions may lead to variations and misalignment.

In order to align the directions of the residual stress, it is considered that the directions of the residual stress only need to be matched on the basis of the orientation of the material coordinate system at each position of the measurement point at which the residual stress is calculated. However, in the method disclosed in Patent Literature 3, the stress in the deformation process is sequentially calculated using only the strain history. Therefore, change in orientation of the sheared material 101 in the deformation process is not known and no information about the orientation of the material coordinate system at each position of the measurement point at which the stress is calculated is obtained.

Therefore, the inventors have made an intensive study to solve such problems. As a result, the inventors have conceived acquisition of not only the strain history about the strain in the deformation process caused by shearing of the metal sheet but also a history of rotation (hereinafter referred to as "spin") of the material coordinate system at each measurement point at which the strain history is acquired. Then, the history of the spin at each measurement point is acquired as information about the orientation of the material coordinate system for which incremental update is performed in the deformation process of the metal sheet, relative to the global coordinate system. Furthermore, the inventors have found that conversion of the residual stress calculated according to the material coordinate system at each measurement point of the metal sheet into stress in a predetermined direction in the global coordinate system, based on the spin history, enables acquisition of a distribution of the residual stress at a plurality of the measurement points, with the orientations aligned.

The present invention has been made on the basis of the results of the above studies, and will be specifically described below.

[First Embodiment]

<Metal sheet shearing test method>

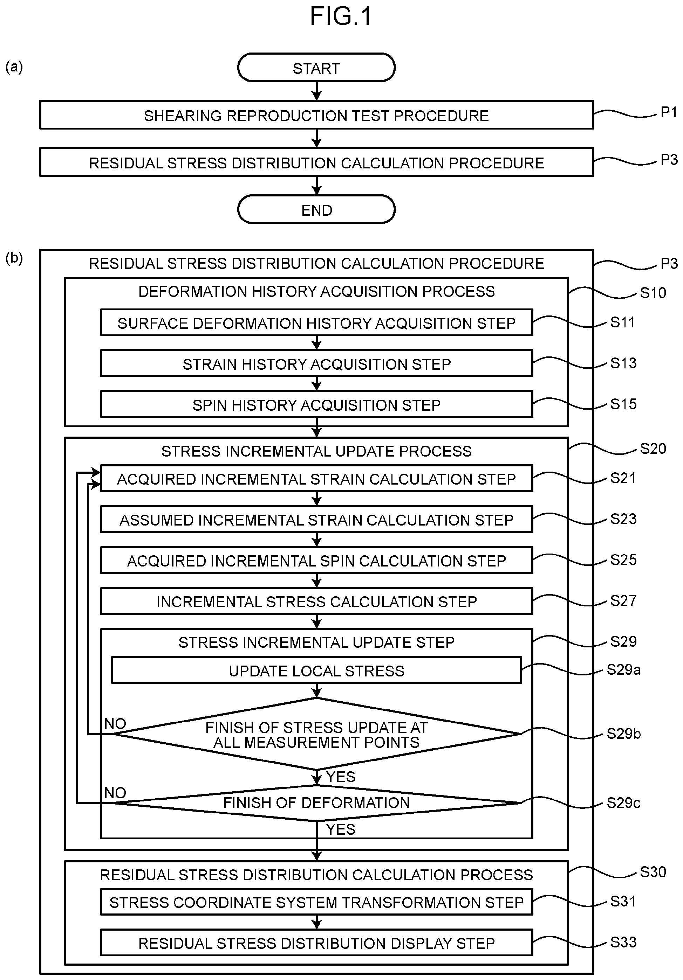

A metal sheet shearing test method according to a first embodiment of the present invention is configured to calculate residual stress in a sheared end of a sheared metal sheet, and includes a shearing reproduction test procedure P1 and a residual stress distribution calculation procedure P3, as illustrated in FIG. 1(a). Furthermore, as illustrated in FIG. 1(b), the residual stress distribution calculation procedure P3 includes a deformation history acquisition process S10, a stress incremental update process S20, and a residual stress distribution calculation process S30. Hereinafter, as illustrated in FIG. 2, each of the procedures and each of the processes, which are described above, will be described for calculation of a residual stress distribution in a sheared end side surface 127 of a sheared end 123 that is a deformed portion in a test piece 121 subjected to shearing.

[Shearing reproduction test procedure]

The shearing reproduction test procedure P1 is a procedure of reproducing a process of forming the sheared end 103 of the sheared material 101 obtained by shearing of the metal sheet 100 by shearing of the test piece 121 that uses a metal sheet as a test material (see FIG. 2).

In the shearing reproduction test procedure P1, for example, as illustrated in FIG. 5, shearing tools 11 having a punch 13, a die 15, and a holder 17 are used to perform shearing of the test piece 121. In the shearing using the shearing tools 11, the test piece 121 is arranged between the die 15 and the holder 17, the die 15 and the holder 17 are fixed with a bolt to prevent floating of the test piece 121 from the die 15 during the shearing, and then the punch 13 and the die 15 are relatively moved. The method of preventing floating of the test piece 121 from the die 15 is not limited to the fixing with the bolt, and for example, a constant load may be applied to the holder 17 by using a power source such as hydraulic pressure.

[Residual stress distribution calculation procedure]

The residual stress distribution calculation procedure P3 is a procedure of calculating the residual stress distribution in the sheared end side surface 127 (see FIG. 2) of the sheared end 123 formed in the test piece 121 during the shearing reproduction test procedure P1.

As illustrated in FIG. 1(b), the residual stress distribution calculation procedure P3 includes the deformation history acquisition process S10, the stress incremental update process S20, and the residual stress distribution calculation process S30.

<<Deformation history acquisition process>>

The deformation history acquisition process S10 is a process of acquiring a deformation history of the sheared end side surface 127 in a deformation process of the sheared end 123 caused by shearing of the test piece 121, and includes a surface deformation history acquisition step S11, a strain history acquisition step S13, and a spin history acquisition step S15, as illustrated in FIG. 1(b).

(Surface deformation history acquisition step)

The surface deformation history acquisition step S11 is a step of setting a plurality of measurement points on the sheared end side surface 127 of the test piece 121, and measuring three-dimensional coordinates of each of the measurement points in a process of shearing the test piece 121 in the shearing reproduction test procedure P1 to acquire a surface deformation history of the sheared end side surface 127 from the start to the end of deformation of the sheared end 123. In the present first embodiment, two cameras 29 are installed at positions where the sheared end side surface 127 of the test piece 121 can be captured, as illustrated in FIG. 5. Then, the three-dimensional coordinates of each measurement point are measured by a digital image correlation method (hereinafter referred to as "DIC").

In the DIC, the sheared end side surface 127 in the deformation process of the sheared end 123 caused by the shearing of the test piece 121 is imaged at a predetermined time interval by using the two cameras 29, and an image (hereinafter, referred to as "DIC image") obtained by imaging at each time step is subjected to image analysis. Therefore, it is possible to measure the three-dimensional coordinates of each measurement point at each time step from the start to the end of deformation of the sheared end 123. As illustrated in FIG. 2, a range of image capture by the two cameras 29 only needs to be determined sufficiently as a range in which a sheet side surface 129a of the test piece 121 including the sheared end side surface 127 is always in the range of image capture from the start to the end of deformation. In addition, it is sufficient that the sheet side surface 129a of the test piece 121 including the sheared end side surface 127 is captured, without need for capturing the whole of a sheet side surface 129.

(Strain history acquisition step)

The strain history acquisition step S13 is a step of acquiring a strain history of the sheared end side surface 127 in shearing of the test piece 121, from the surface deformation history of the sheared end side surface 127 acquired in the surface deformation history acquisition step S11.

(Spin history acquisition step)

The spin history acquisition step S15 is a step of acquiring a spin history of the sheared end side surface 127 in the deformation process of the sheared end 123, from the surface deformation history of the sheared end side surface 127 acquired in the surface deformation history acquisition step S11.

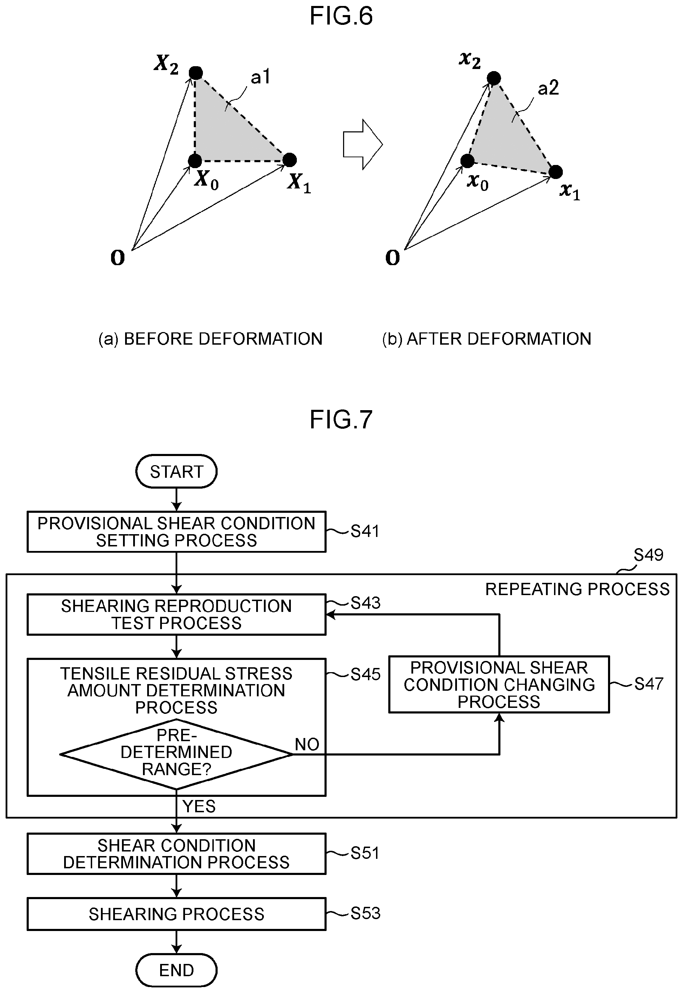

As specific processing in the deformation history acquisition process S10, an example of setting three measurement points on the sheared end side surface 127, as illustrated in FIG. 6, will be described.

First, as illustrated in FIG. 6, a plurality of measurement points is set on the sheared end side surface 127, and three-dimensional coordinates of each measurement point are measured at the predetermined time interval in the deformation process of the sheared end 123 caused by the shearing of the test piece.

In FIG. 6, a coordinate of each measurement point at a certain time step in the deformation process is defined as a coordinate Xi before deformation, and a coordinate of each measurement point at a time step after a predetermined time interval from the certain time step is defined as a coordinate $x_i$ after the deformation (i = 0, 1, or 2).

Then, when a region a1 formed of the three measurement points at the time step before deformation is deformed into a region a2 at the time step after deformation, the distortion and the spin caused by the deformation of the region formed of the three measurement points can be calculated as follows.

The measurement points of the coordinates $X_0$ and $x_0$ are each used as a reference of each of the region a1 before the deformation and the region a2 after the deformation. Then relative positions of the measurement points of the coordinates $X_i$ and $x_i$ (i = 1 or 2) from the corresponding reference point ($X_0$ or $x_0$) are each respectively expressed as $dX_i$ = $X_i$ - $X_0$ (i = 1 or 2) and $dx_i$ = $x_i$ - $x_0$ (i = 1 or 2). At this time, F that satisfies $dx_i$ = $FdX_i$ is referred to as a deformation gradient tensor.

In general, deformation of a region formed of a plurality of measurement points does not need to be obtained from the displacement of three measurement points as described above, and can be expressed by the following Formula (1).

[Mathematical Formula 1]

$$dx = F\, dX \qquad (1)$$

Here, $dX = (dX_1\ dX_2\ \cdots)$, $dx = (dx_1\ dx_2\ \cdots)$

When Formula (1) is solved for the deformation gradient tensor F, Formula (2) is obtained.

[Mathematical Formula 2]

$$F = dx\, dX^{\mathrm{T}} \left(dX\, dX^{\mathrm{T}}\right)^{-1} \qquad (2)$$

Furthermore, when the deformation gradient tensor F is used, a right Caushy-Green deformation tensor C and a right stretch tensor U are expressed by Formulas (3) and (4), respectively.

[Mathematical Formula 3]

$$C = F^{T} \cdot F \qquad (3)$$

$$U = C^{\frac{1}{2}} \qquad (4)$$

Using these, a logarithmic strain tensor (Hencky strain tensor E) and a spin tensor R are defined by Formulas (5) and (6), respectively.

[Mathematical Formula 4]

$$E = \frac{1}{2}\ln(C) \qquad (5)$$

$$R = F \cdot U^{-1} \qquad (6)$$

In Formula (5), the Hencky strain tensor E represents strain at each time step from the start to the end of deformation. Furthermore, in Formula (6), the spin tensor R represents spin at each time step from the start to the end of deformation.

As described above, in acquisition of the deformation history by DIC, firstly, the sheared end side surface 127 of the test piece 121 in the deformation process is imaged at the predetermined time interval. Next, the DIC image obtained by imaging at each time step is subjected to image analysis to measure three-dimensional coordinates (Xi and xi) of each measurement point set on the sheared end side surface 127. Subsequently, the Hencky strain tensor E and the spin tensor R at a predetermined position on the sheared end side surface 127 are calculated from the measured three-dimensional coordinates of each measurement point (Formulas (1) to (6)).

Then, the Hencky strain tensor E calculated at each time step from the start to the end of deformation is acquired as the strain history (S13). Similarly, the spin tensor R calculated at each time step from the start to the end of deformation is acquired as the spin history (S15).

<<Stress incremental update process>>

The stress incremental update process S20 is a process of performing incremental update of stress in the material coordinate system (hereinafter, also referred to as "local stress") at each measurement point set on the sheared end side surface 127 of the test piece 121, from the start to the end of deformation in the deformation process of the sheared end 123. As illustrated in FIG. 1(b), the stress incremental update process S20 includes an acquired incremental strain calculation step S21, an assumed incremental strain calculation step S23, an acquired incremental spin calculation step S25, an incremental stress calculation step S27, and a stress incremental update step S29.

(Acquired incremental strain calculation step)

First, in the acquired incremental strain calculation step S21, acquired incremental strain is calculated from the strain history of the sheared end side surface 127 acquired in the strain history acquisition step S13. The acquired incremental strain is an increment of strain for each time step of strain for which the strain history is acquired in the strain history acquisition step S13. When the three-dimensional coordinates in the deformation process of each measurement point set on the sheared end side surface 127 in the surface deformation history acquisition step S11 are acquired as the surface deformation history, the strain history acquired in the strain history acquisition step S13 includes strains in two in-plane directions and in-plane shear strain. Therefore, the acquired incremental strain calculated in the acquired incremental strain calculation step S21 is an incremental strain of each of the strains in the two in-plane directions and the in-plane shear strain.

Then, the acquired incremental strain is calculated for each time step at which the strain history is acquired. The acquired incremental strain at each time step can be calculated from, for example, the strain at the time step and strain at time steps before and after the time step.

(Assumed incremental strain calculation step)

Next, in the assumed incremental strain calculation step S23, an assumed incremental strain is calculated. The assumed incremental strain is an increment of strain for each time step of strain other than the strain for which the strain history is acquired in the strain history acquisition step S13. Then, the strain other than the strain for which the strain history is acquired can be obtained on the basis of mechanics of plasticity in an assumed deformation state, assuming a deformation state of the sheared end side surface 127 from the deformation process of the sheared end 123 caused by shearing of the test piece 121.

As described above, in the strain history acquisition step S13, three-component strains of the strains $\varepsilon_x$ and $\varepsilon_y$ in the two in-plane directions (x direction and y direction) and the in-plane (xy plane) shear strain $\varepsilon_{xy}$ of the sheared end side surface 127 are calculated.

However, on the sheared end side surface 127 of the test piece 121, not only the strain components in the in-plane directions but also six-component strains ($\varepsilon_x$, $\varepsilon_y$, $\varepsilon_z$, $\varepsilon_{xy}$, $\varepsilon_{yz}$, and $\varepsilon_{zx}$) including strain components in an out-of-plane direction (z direction) are generated.

In general, the test piece 121 in the deformation process by the shearing has a surface which is a free surface, and therefore, no stress is generated in a direction perpendicular to the surface of the test piece 121. In other words, it can be assumed that the deformation state of the sheared end side surface 127 of the test piece 121 is in plane stress conditions.

Then, on the basis of the mechanics of plasticity in the assumed deformation state, a formula to give incremental stress in the out-of-plane direction can be obtained, using the strains ($\varepsilon_x$, $\varepsilon_y$, and $\varepsilon_{xy}$) acquired from the surface deformation history acquired by DIC and the strains ($\varepsilon_z$, $\varepsilon_{yz}$, and $\varepsilon_{zx}$) including an unknown out-of-plane direction.

Assuming that the deformation state of the sheared end side surface 127 is in the plane stress conditions, the incremental stress in the out-of-plane direction is 0, and therefore, the formula representing the strain and the incremental stress based on the mechanics of plasticity can be used to unambiguously calculate the strain ($\varepsilon_z$) in the out-of-plane direction.

In other words, the deformation state of the sheared end side surface 127 is assumed from the deformation process of the sheared end 123 caused by shearing of the test piece 121. Then, on the basis of the mechanics of plasticity in the assumed deformation state, the strain other than the strain for which the strain history is acquired can be obtained in the strain history acquisition step S13.

In this way, in the assumed incremental strain calculation step S23, the strain other than the strain for which the strain history is acquired at each time step in the deformation process of the sheared end 123 is calculated, assuming the deformation state of the sheared end side surface 127. Then, similarly to the acquired incremental strain described above, the assumed incremental strain is calculated from the strain (assumed strain) calculated assuming the deformation state of the sheared end side surface 127 at each time step in the deformation process of the sheared end 123. Similarly to the acquired incremental strain described above, the assumed incremental strain at each time step can be calculated from the strain obtained at the time step and strain at time steps before and after the time step.

(Acquired incremental spin calculation step)

Subsequently, in the acquired incremental spin calculation step S25, acquired incremental spin is calculated from the spin history acquired in the spin history acquisition step S15. The acquired incremental spin is an increment of spin for each time step in the sheared end side surface 127 acquired at the predetermined time interval. The acquired incremental spin at each time step can be calculated, for example, from the spin at the time step and spin at time steps before and after the time step.

(Incremental stress calculation step)

Subsequently, in the incremental stress calculation step S27, the acquired incremental strain, the assumed incremental strain, and the acquired incremental spin are used to calculate the incremental stress at the sheared end side surface 127 in the deformation process.

A material constitutive law based on elasto-plastic dynamics can be used to calculate the incremental stress. At this time, the incremental stress in the material coordinate system is represented by a relationship expressed by Formula (7) by using the incremental strain (the acquired incremental strain and the assumed incremental strain) and the incremental spin.

[Mathematical Formula 5]

$$\dot{\sigma} = \boldsymbol{C}^{ep} : \boldsymbol{D} + \boldsymbol{W} \cdot \sigma - \sigma \cdot \boldsymbol{W} \qquad (7)$$

Here,

$\sigma$ : Stress tensor (stress tensor)
$\dot{\sigma}$ : Incremental stress tensor (incremental stress tensor)
$\boldsymbol{C}^{ep}$ : Elasto-plasticity coefficient tensor (elasto-plasticity coefficient tensor)
$D$ : Incremental strain tensor (incremental strain tensor)
$W$ : Incremental spin tensor (incremental spin tensor)

In Formula (7), an incremental strain tensor D is an increment of the strain tensor E at a unit time step, and an incremental spin tensor W is an increment of the spin tensor R at the unit time step.

Furthermore, an elasto-plasticity coefficient tensor $C^{ep}$ in Formula (7) can be given by Formula (8).

[Mathematical Formula 6]

$$C^{ep} = C^e - \frac{(C^e : r) \otimes \left(\frac{\partial f}{\partial \sigma} : C^e\right)}{-\frac{\partial f}{\partial q} \cdot h + \frac{\partial f}{\partial \sigma} : C^e : r} \qquad (8)$$

Here,

$C^e$ :    Elastic coefficient tensor (elastic coefficient tensor)

$f$ :    Yield function (yield function)

$r$ :    Plasticity increment direction tensor (plasticity increment direction tensor)

$q$ :    Internal variable tensor (internal variable tensor) (Equivalent plastic strain (equivalent plastic strain) or Back stress tensor (back stress tensor) or the like)

$h$ :    Function ($\dot{q} = \lambda h(\sigma, q)$) representing increment of internal variable tensor (increment of internal variable tensor)

$\lambda$ :    Plasticity coefficient (plasticity coefficient)

In the present first embodiment, in an example of the material constitutive law, the incremental stress is calculated from the incremental strain (the acquired incremental strain and the assumed incremental strain), on the basis of the Y-U model disclosed in Non Patent Literature 1 enabling reproduction of a Bauschinger effect with high accuracy.

The Y-U model can be classified into a two-surface model in which a yield surface moves in a bounding surface, and development of the bounding surface (center β and radius R) and the yield surface (center α and radius Y) is defined by the following Formula (9) by using incremental strain.

[Mathematical Formula 7]

$$\alpha^* = \alpha - \beta$$

$$\dot{\alpha}^* = C\left\{\left(\frac{a}{Y}\right)(\sigma - \alpha) - \sqrt{\frac{a}{\alpha^*}}\alpha^*\right\}\dot{\bar{\varepsilon}}$$

$$\dot{\beta} = m\left\{\left(\frac{b}{Y}\right)(\sigma - \alpha) - \beta\right\}\dot{\bar{\varepsilon}} \qquad (9)$$

$$\dot{R} = m(R_{sat} - R)\dot{\bar{\varepsilon}}$$

$$a = a_0 + R$$

**Here,** $Y, a_0, C, b$, m, and $R_{sat}$ are material constants

At this time, Formula (8) is expressed by Formula (10) .

[Mathematical Formula 8]

$$C^{ep} = C^e - \frac{\left(C^e : \frac{\partial f}{\partial \sigma}\right) \otimes \left(\frac{\partial f}{\partial \sigma} : C^e\right)}{\frac{\partial f}{\partial \sigma} \cdot \left[C\left\{\left(\frac{a}{Y}\right)(\sigma - \alpha) - \sqrt{\frac{a}{\alpha^*}}\alpha^*\right\} + m\left\{\left(\frac{b}{Y}\right)(\sigma - \alpha) - \beta\right\}\right] + \frac{\partial f}{\partial \sigma} : C^e : \frac{\partial f}{\partial \sigma}} \qquad (10)$$

In this way, when the incremental strain and the incremental spin can be provided, the incremental stress is obtained according to the material constitutive law.

The material constitutive law is not limited to the Y-U model described above, and the elasto-plasticity coefficient tensor may be calculated according to any material constitutive law. For example, when a material constitutive law assuming isotropic hardening instead of the Y-U model is used, the elasto-plasticity coefficient tensor $C^{ep}$ is expressed by Formula (11).

[Mathematical Formula 9]

$$C^{ep} = C^e - \frac{\left(C^e : \frac{\partial f}{\partial \sigma}\right) \otimes \left(\frac{\partial f}{\partial \sigma} : C^e\right)}{H' + \frac{\partial f}{\partial \sigma} : C^e : \frac{\partial f}{\partial \sigma}} \qquad (11)$$

Here, $H' = \frac{\partial H}{\partial \varepsilon^p}$ , $H$ is a function $(\bar{\sigma} = H(\bar{\varepsilon}^p))$ representing a relationship between equivalent stress (equivalent stress)

$\overline{\sigma}$ and equivalent plastic strain $\overline{\overline{\varepsilon^p}}$ in a uniaxial tensile test (uniaxial tensile test)

In addition, a yield function f used to give the elasto-plasticity coefficient tensor $C^{ep}$ can use not only an isotropic von Mises yield function but also any yield function such as Hill'48 or Yld2000-2d that can express anisotropy of a material (metal sheet) with high accuracy.

(Stress incremental update step)

Subsequently, in the stress incremental update step S29, the incremental stress calculated for each measurement point is used to perform incremental update of the stress in the material coordinate system at each measurement point, from the start to the end of deformation of the sheared end.

In the stress incremental update step S29, the incremental stress calculated for each measurement point is used to update the local stress first, at a certain time step in the deformation process (S29a). Then, it is determined whether the stress update at all the measurement points is finished (S29b).

When it is determined that the stress update at all the measurement points has not been finished (S29b), processing of S21, S23, S25, S27, and S29 described above is performed, as illustrated in FIG. 1(b), for a measurement point at which the stress update has not been finished, and the local stress is updated (S29a).

When it is determined that the stress update is finished for all the measurement points (S29b), it is determined whether the deformation of the sheared end is finished, that is, whether there is a next time step before the end of deformation of the sheared end (S29c).

When it is determined that the deformation is not finished, the process proceeds to a next time step of the deformation process. Then, for all the measurement points, calculation of the acquired incremental strain (S21), calculation of the assumed incremental strain (S23), calculation of the acquired incremental spin (S25), calculation of the incremental stress (S27), incremental update of the local stress (S29a), and determination of the stress update (S29b) are performed. In this way, in the stress incremental update step S29, the processing of S29a to S29c is performed, and the incremental update of the local stress at all the measurement points is performed from the start to the end of deformation.

<<Residual stress distribution calculation process>>

The residual stress distribution calculation process S30 is a process of converting the local stress at each measurement point at the end of deformation of the sheared end 123, into a global stress value in the global coordinate system, and calculating the residual stress distribution in the sheared end side surface 127. In the present first embodiment, the residual stress distribution calculation process S30 includes a stress coordinate system transformation step S31 and a residual stress distribution display step S33.

(Stress coordinate system transformation step)

First, in the stress coordinate system transformation step S31, among the local stresses at each measurement point subjected to incremental update from the start to the end of deformation of the sheared end 123 in the stress incremental update process S20, a local stress at the end of the deformation is converted into a stress value in a predetermined direction in the global coordinate system (the global stress value). Then, in the stress coordinate system transformation step S31, the converted global stress values at the respective measurement points are obtained as the residual stress distribution in the sheared end side surface 127.

When the local stress obtained at each measurement point is $\sigma$ and a vector in a predetermined direction in the global coordinate system is n, a global stress value $\sigma_g$ in the global coordinate system can be calculated by Formula (12).
[Mathematical Formula 10]

$$\sigma_g = n^T \sigma n \quad (12)$$

Here,

$\sigma$ : **Local stress in the material coordinate system**
*n* : **Predetermined direction in the global coordinate system**

The predetermined direction in the global coordinate system is not particularly limited as long as the predetermined direction is a direction represented in the global coordinate system, and it is sufficient to appropriately set a direction in which the stresses are calculated so that the directions of the stresses are aligned.

(Residual stress distribution display step)

Subsequently, in the residual stress distribution display step S33, the residual stress distribution in the sheared end side surface 127 obtained in the stress coordinate system transformation step S31 is displayed.

In order to display the residual stress distribution, for example, the coordinates of each measurement point for which the global stress value is obtained are preferably converted into coordinates on the DIC image of the sheared end side surface 127.

For conversion to the coordinates on the DIC image of the sheared end side surface 127, coordinates (X,Y,Z) of each measurement point in the global coordinate system can be converted into coordinates (u,v) on a two-dimensional plane on the DIC image by Formula (13). [Mathematical Formula 11]

$$\left\{\begin{matrix} u \\ v \\ 1 \end{matrix}\right\} = \begin{pmatrix} f_x & 0 & c_x \\ 0 & f_y & c_y \\ 0 & 0 & 1 \end{pmatrix}\begin{pmatrix} r_{11} & r_{12} & r_{13} & t_1 \\ r_{21} & r_{22} & r_{23} & t_2 \\ r_{31} & r_{32} & r_{33} & t_3 \end{pmatrix}\left\{\begin{matrix} X \\ Y \\ Z \\ 1 \end{matrix}\right\} = \mathrm{A}(R \mid t)\left\{\begin{matrix} X \\ Y \\ Z \\ 1 \end{matrix}\right\} \qquad (13)$$

Here,

$f_x, f_y$ :      Focal distance (focal distance)
$c_x, c_y$ :      Principal point (principal point) (image center)
$r_{ij}$ :      Rotation matrix component (rotation matrix component)
$t_i$ :      Translation matrix component (translation matrix component)
A :      Internal parameter matrix (internal parameter matrix)
$(R \mid t)$ :      External parameter matrix (external parameter matrix)

In the present first embodiment, the residual stress distribution calculation process S30 is performed after the finish of the stress incremental update process S20. However, in order to display the strain distribution in the sheared end side surface 127 in the deformation process of the sheared end 123, the residual stress distribution calculation process S30 may be performed at each time step after finish of the stress update at all measurement points at each time step (S29b), in the stress incremental update step S29.

As described above, in the metal sheet shearing test method according to the present first embodiment, the process of forming the sheared end 103 of the sheared material 101 obtained by shearing of the metal sheet 100 is reproduced by shearing of the test piece 121 using the metal sheet 100 as the test material. Then, the surface deformation history of the sheared end side surface 127 in the deformation process of the sheared end 123 formed by shearing of the test piece 121 is acquired. Furthermore, on the basis of the surface deformation history of the sheared end side surface 127, the stress in the sheared end side surface 127 from the start to the end of deformation of the sheared end 123 is obtained by incremental update. This configuration makes it possible to highly accurately obtain the residual stress distribution in the sheared end side surface 127 with the directions of the stress aligned, even when the orientation of the material coordinate system changes at each of the positions of the measurement points in the sheared end side surface 127 by shearing of the test piece 121.

In addition, as illustrated in FIG. 3(b) described above, the maximum residual stress in the sheared end side surface 127 is correlated with the residual stress in a sheared edge 125. Therefore, the metal sheet shearing test method according to the present first embodiment enables evaluation of the maximum residual stress from the residual stress distribution obtained for the sheared end side surface 127 of the test piece 121 to determine the presence or absence of the portion that may be the crack initiation point of delayed fracture or fatigue fracture in the sheared edge 125 generated by shearing as well. Note that the determination can be made, for example, on the basis of whether the maximum residual stress in the sheared end side surface 127 exceeds a predetermined value.

Furthermore, in the metal sheet shearing test method according to the present first embodiment, it is possible to highly accurately calculate a stress distribution history of the sheared end side surface 127 even during deformation of the sheared end 123 by shearing of the test piece 121. Furthermore, it is possible to accurately and readily calculate the residual stress distribution generated in the sheared end side surface of the metal sheet, even for shear deformation or the like followed by fracture of the metal sheet, which is difficult to predict by the finite element analysis.

In the metal sheet shearing test method according to the present first embodiment, the assumed incremental strain calculation step S23 has been configured to assume the deformation state of the sheared end side surface 127 from the deformation process of the sheared end 123 in the test piece 121 and calculate the assumed incremental strain on the basis of the mechanics of plasticity in the assumed deformation state. However, in the present invention, the assumed incremental strain calculation step may be a step of performing the finite element analysis in a process of plastic deformation of the sheared end 123 by shearing of the test piece 121, assuming the deformation state (e.g., strain ratio) of the sheared end side surface 127 from a result of the finite element analysis, and calculating the assumed incremental strain in the sheared end side surface 127.

When the assumed incremental strain is calculated assuming the deformation state of the sheared end side surface 127 by the finite element analysis of the deformation process of the sheared end 123, the entire test piece 121 does not need to be an analysis target, and it is sufficient to model only the sheared end 123 and the vicinity thereof to perform the finite element analysis. This configuration enables assumption of the deformation state of the sheared end side surface 127 in a shorter time as compared with the finite element analysis for the entire test piece 121 as the analysis target.

In particular, the finite element analysis using a solid element that enables calculation of the stress in the sheet thickness direction with high accuracy considerably increases a calculation time, and is less used for shearing of general metal sheet. However, if part of the metal sheet including the sheared end subjected to plastic deformation caused by shearing is the analysis target, the deformation state of the sheared end side surface can be predicted in a short time with high accuracy, even if the finite element analysis is performed using the solid element. Therefore, in the present invention, it is possible to assume the deformation state predicted by the finite element analysis using the solid element, combine acquisition of the strain history and the spin history of the sheared end side surface 127 in the deformation process of the sheared end, and calculate the residual stress distribution in the sheared end side surface with higher accuracy.

[Second Embodiment]

<Metal sheet shearing test system>

A metal sheet shearing test system (hereinafter, referred to as "shearing test system") according to a second embodiment of the present invention calculates a residual stress distribution generated in a sheared end of a sheared metal sheet material. Hereinafter, each configuration of a shearing test system 1 will be described for shearing of the test piece 121 for calculation of the residual stress distribution generated in the sheared end side surface 127, as illustrated in FIG. 5.

In an example as illustrated in FIG. 5, the shearing test system 1 includes a shearing reproduction test apparatus 10 that performs shearing of the test piece 121, and a residual stress distribution calculation device 20 that calculates the residual stress distribution in the sheared end side surface 127 (see FIG. 2) of the sheared end 123 formed in the test piece 121 by shearing.

<<Shearing reproduction test apparatus>>

The shearing reproduction test apparatus 10 is an apparatus that reproduces the process of forming the sheared end of the sheared metal sheet by shearing of the test piece 121 that uses the metal sheet as the test material. Then, as illustrated in FIG. 5, the shearing reproduction test apparatus 10 includes the shearing tools 11 that include the punch (upper blade) 13, the die (lower blade) 15, and the holder 17, and performs shearing of the test piece 121 being arranged between the die 15 and the holder 17 by relatively moving the punch 13 and the die 15.

<<Residual stress distribution calculation device>>

The residual stress distribution calculation device 20 is a device that calculates the residual stress distribution in the sheared end side surface 127 of the sheared end 123 formed in the test piece 121 by the shearing reproduction test apparatus 10.

In the present second embodiment, as illustrated in FIG. 5, the residual stress distribution calculation device 20 includes a display device 21, an input device 23, a main storage device 25, an auxiliary storage device 27, the cameras 29 and 29, and a measurement control/calculation processing section 31.

In the residual stress distribution calculation device 20, devices configured by a personal computer (PC) or the like can be applied to the display device 21, the input device 23, the main storage device 25, the auxiliary storage device 27, and the measurement control/calculation processing section 31. In this configuration, the display device 21, the input device 23, the main storage device 25, the auxiliary storage device 27, and the cameras 29 and 29 are connected to the measurement control/calculation processing section 31, and each of the functions thereof is executed according to a command from the measurement control/calculation processing section 31.

The display device 21 is used to display an image of the sheared end side surface 127 at the sheared end 123 of the test piece 121 obtained by imaging by the two cameras 29, the calculated residual stress distribution in the sheared end side surface 127, and the like, and includes a liquid crystal display or the like.

The input device 23 is used to input an image of the sheared end side surface 127, a display instruction for display of the residual stress distribution, a condition by an operator, and the like, and includes a keyboard, a mouse, and the like.

The main storage device 25 is used for, for example, storing various files, such as the image obtained by imaging the sheared end side surface 127 by the two cameras 29 and a program for calculating the residual stress distribution, and includes a hard disk or the like.

The auxiliary storage device 27 is used to temporarily store or calculate data used by the measurement control/calculation processing section 31, and includes a random access memory (RAM) and the like.

The cameras 29 and 29 perform stereo photography for the sheared end side surface 127, in the deformation process of the sheared end 123 caused by shearing of the test piece 121.

The measurement control/calculation processing section 31 includes a measurement control section 33 that controls measurement of the surface deformation history of the sheared end side surface 127, and a calculation processing section 35 that performs calculation processing for calculating the residual stress distribution on the basis of the measured surface deformation history.

The measurement control section 33 includes image capture means 33a and three-dimensional coordinate calculating means 33b.

The image capture means 33a controls imaging of the sheared end side surface 127 at the predetermined time interval in the deformation process of the sheared end 123 caused by shearing of the test piece 121, by using the two cameras 29. The three-dimensional coordinate calculating means 33b performs image analysis for the image of the sheared end side surface 127 obtained by imaging, and calculates the three-dimensional coordinates in the deformation process, for the plurality of measurement points set on the sheared end side surface 127.

In the present second embodiment, the three-dimensional coordinate calculating means 33b performs image processing by DIC on an image obtained by performing stereo photography for the sheared end side surface 127 of the test piece 121 by the two cameras 29, and calculates the three-dimensional coordinates of the plurality of measurement points set on the sheared end side surface 127.

In the DIC, the sheared end side surface 127 is imaged at the predetermined time interval in the deformation process of the sheared end 123 of the test piece 121, and an image (hereinafter, referred to as the "DIC image") obtained by imaging at each time step is subjected to the image analysis. Therefore, measurement is made possible using the three-dimensional coordinates of each measurement point at each time step from the start to the end of deformation of the sheared end 123.

<<Deformation history acquisition unit>>

A deformation history acquisition unit 37 acquires the surface deformation history of the sheared end side surface 127, in the deformation process of the sheared end 123 caused by shearing of the test piece 121, and acquires the strain history and the spin history generated in the sheared end side surface 127, from the acquired surface deformation history.

As illustrated in FIG. 5, the deformation history acquisition unit 37 includes a surface deformation history acquisition section 37a, a strain history acquisition section 37b, and a spin history acquisition section 37c.

The surface deformation history acquisition section 37a measures the three-dimensional coordinates, in the deformation process of the sheared end 123 caused by shearing of the test piece 121 using the shearing reproduction test apparatus 10, for the plurality of measurement points set on the sheared end side surface 127 of the sheared end 123 formed in the test piece 121, and acquires the three-dimensional coordinates, as the surface deformation history of the sheared end side surface 127 from the start to the end of deformation of the sheared end 123.

The strain history acquisition section 37b acquires the strain history of the sheared end side surface 127 in the deformation process of the sheared end 123, from the surface deformation history of the sheared end side surface 127 acquired by the surface deformation history acquisition section 37a.

The spin history acquisition section 37c acquires the spin history of the sheared end side surface 127 in the deformation process of the sheared end 123, from the surface deformation history of the sheared end side surface 127 acquired by the surface deformation history acquisition section 37a.

<<Stress incremental update unit>>

A stress incremental update unit 39 performs incremental update, from the start to the end of deformation in the deformation process of the sheared end 123, and obtains the stress in the material coordinate system at each measurement point set on the sheared end side surface 127 of the test piece 121. As illustrated in FIG. 5, the stress incremental update unit 39 includes an acquired incremental strain calculation section 39a, an assumed incremental strain calculation section 39b, an acquired incremental spin calculation section 39c, an incremental stress calculation section 39d, and a stress incremental update section 39e.

(Acquired incremental strain calculation section)

The acquired incremental strain calculation section 39a calculates the acquired incremental strain from the strain history of the sheared end side surface 127 acquired by the strain history acquisition section 37b.

The acquired incremental strain is an increment of strain for each time step of strain for which the strain history is acquired by the strain history acquisition section 37b. For example, when the three-dimensional coordinates in the deformation process of each measurement point set on the sheared end side surface 127 are acquired as the surface deformation history, the strain history acquired by the strain history acquisition section 37b includes the strains in the two in-plane directions and the in-plane shear strain. In this case, the acquired incremental strain calculated by the acquired incremental strain calculation section 39a is an incremental strain of each of the strains in the two in-plane directions and the in-plane shear strain.

Then, the acquired incremental strain is calculated for each time step at which the strain history of the sheared end side surface 127 is acquired. The acquired incremental strain at each time step can be calculated from, for example, the strain at the time step and strain at time steps before and after the time step.

(Assumed incremental strain calculation section) The assumed incremental strain calculation section 39b calculates the assumed incremental strain. The assumed incremental strain is an increment of strain for each time step of strain other than the strain for which the strain history is acquired by the strain history acquisition section 37b. Then, the strain other than the strain for which the strain history is acquired can be calculated on the basis of the mechanics of plasticity in the assumed deformation state, assuming the deformation state of the sheared end side surface 127 from the deformation process of the sheared end.

It is sufficient that the calculation of the assumed incremental strain by the assumed incremental strain calculation section 39b is performed according to a procedure similar to that in the assumed incremental strain calculation step S23 of the metal sheet shearing test method according to the present first embodiment described above. In other words, first, it is assumed that the deformation state of the sheared end side surface 127 in the test piece 121 is in the plane stress conditions. Then, on the basis of the mechanics of plasticity in the assumed deformation state, the formula to give the incremental stress in the out-of-plane direction is obtained, using the strains in the two in-plane directions and the in-plane shear strain which are acquired by the strain history acquisition section 37b, and the strain including the unknown out-of-plane direction.

Assuming that the deformation state of the sheared end side surface 127 is in the plane stress conditions, the incremental stress in the out-of-plane direction is 0, and therefore, the formula representing the strain and the incremental stress based on the mechanics of plasticity can be used to unambiguously calculate the strain in the out-of-plane direction.

In this way, the assumed incremental strain calculation section 39b calculates the strain other than the strain for which the strain history is acquired at each time step in the deformation process of the sheared end 123, assuming the deformation state of the sheared end side surface 127. Then, similarly to the acquired incremental strain described above, the assumed incremental strain is calculated from the strain calculated assuming the deformation state of the sheared end side surface 127 at each time step in the deformation process of the sheared end 123. Similarly to the acquired incremental strain described above, the assumed incremental strain at each time step can be calculated from the strain obtained at the time step and strain at time steps before and after the time step.

(Acquired incremental spin calculation section)

The acquired incremental spin calculation section 39c calculates the acquired incremental spin from the spin history acquired by the spin history acquisition section 37c. The acquired incremental spin is an increment of the spin of the sheared end side surface 127 obtained at the predetermined time interval. The acquired incremental spin at each time step can be calculated, for example, from the spin at the time step and spin at time steps before and after the time step.

(Incremental stress calculation section)

The incremental stress calculation section 39d uses the acquired incremental strain, the assumed incremental strain, and the acquired incremental spin to calculate the incremental stress at the sheared end side surface 127 in the deformation process of the sheared end 123. The calculation of the incremental stress by the incremental stress calculation section 39d can be performed according to a procedure similar to that in the incremental stress calculation step S27 of the metal sheet shearing test method according to the present first embodiment described above.

For the calculation of the incremental stress by the incremental stress calculation section 39d, as described above, the Y-U model (Non Patent Literature 1) that enables reproduction of the Bauschinger effect with high accuracy can be suitably applied as the material constitutive law. However, the present invention is not limited to the incremental stress calculation section 39d to which the Y-U model is applied as the material constitutive law, and the incremental stress calculation section 39d to which any material constitutive law is applied may be used. In addition, the yield function f used to give the elasto-plasticity coefficient tensor $C^{ep}$ by the material constitutive law is not limited to the isotropic von Mises yield function, and may use any yield function such as Hill'48 or Yld2000-2d that can express anisotropy of the material (metal sheet) with high accuracy.

(Stress incremental update section)

The stress incremental update section 39e uses the incremental stress calculated for each measurement point by the incremental stress calculation section 39d to perform incremental update of the stress (the local stress) in the material coordinate system at each measurement point, from the start to the end of deformation of the sheared end 123.

The stress incremental update section 39e uses the incremental stress calculated for each measurement point first to update the local stress, at a certain time step in the deformation process.

Next, the stress incremental update section 39e determines whether the update of the local stress is finished, for all the measurement points. When it is determined that the update of the local stress is not finished for all the measurement points, processing by the acquired incremental strain calculation section 39a, the assumed incremental strain calculation section 39b, the acquired incremental spin calculation section 39c, and the incremental stress calculation section 39d is performed, for a measurement point for which update of the local stress is not finished. Then, the stress incremental update section 39e updates the local stress at the measurement point where the local stress is not updated.

When it is determined that the local stress is updated for all the measurement points, the stress incremental update section 39e determines whether the deformation of the sheared end 123 is finished, that is, whether there is a next time step before the end of deformation of the sheared end 123.

When it is determined that the deformation is not finished, the process proceeds to a next time step in the deformation process, and processing by the acquired incremental strain calculation section 39a, the assumed incremental strain calculation section 39b, the acquired incremental spin calculation section 39c, and the incremental stress calculation section 39d is performed, for all the measurement points. Then, the local stress is updated for all the measurement points. When it is determined that the deformation is finished, the processing by the stress incremental update section 39e is finished.

In this way, the stress incremental update unit 39 performs incremental update of the stress in the material coordinate system at all the measurement points from the start to the end of deformation of the sheared end 123.

<<Residual stress distribution calculation unit>>

A residual stress distribution calculation unit 41 converts the stress in the material coordinate system at each measurement point at the end of deformation into the stress in the global coordinate system, and calculates the residual stress distribution in the sheared end side surface 127. In the present second embodiment, the residual stress distribution calculation unit 41 includes a stress coordinate system transformation section 41a and a residual stress distribution display section 41b.

(Stress coordinate system transformation section)

The stress coordinate system transformation section 41a converts, among the stresses in the material coordinate system at each measurement point obtained by incremental update from the start to the end of deformation of the sheared end 123 by the stress incremental update unit 39, the stress at the end of deformation of the sheared end 123 into the stress value in the predetermined direction in the global coordinate system (the global stress value). Then, the stress coordinate system transformation section 41a obtains the converted global stress values at the respective measurement points, as the residual stress distribution in the sheared end side surface 127.

When the local stress in the material coordinate system obtained at each measurement point is $\sigma$ and the predetermined direction in the global coordinate system is the vector n, the global stress value $\sigma_g$ in the global coordinate system can be calculated by Formula (12) described above.

(Residual stress distribution display section)

The residual stress distribution display section 41b displays the residual stress distribution in the sheared end side surface 127 obtained by the stress coordinate system transformation section 41a. In order to display the residual stress distribution by the residual stress distribution display section 41b, as in the residual stress distribution display step S33 described above, the coordinates of each measurement point for which the global stress value is obtained are preferably converted into coordinates on the DIC image of the sheared end side surface 127. For conversion to the coordinates on the DIC image of the sheared end side surface 127, coordinates (X,Y,Z) of each measurement point in the global coordinate system can be converted into coordinates (u,v) on a two-dimensional plane on the DIC image by Formula (13) described above.

As described above, in the metal sheet shearing test system 1 according to the present second embodiment, the process of forming the sheared end 103 of the sheared material 101 obtained by shearing of the metal sheet 100 is reproduced by shearing of the test piece 121 using the metal sheet 100 as the test material. Then, the surface deformation history of the sheared end side surface 127 in the deformation process of the sheared end 123 formed by shearing of the test piece 121 is acquired. Furthermore, on the basis of the surface deformation history of the sheared end side surface 127, the stress in the sheared end side surface 127 from the start to the end of deformation of the sheared end 123 is obtained by incremental update. This configuration makes it possible to highly accurately obtain the residual stress distribution in the sheared end side surface 127 of the sheared end 123 with the directions of the stress aligned, even when the orientation of the material coordinate system changes at each of the positions in the sheared end side surface 127 of the sheared end 123 in shearing of the test piece 121.

In addition, the metal sheet shearing test system 1 according to the present second embodiment enables evaluation of the maximum residual stress from the residual stress distribution obtained for the sheared end side surface 127 of the test piece 121 to determine the presence or absence of the portion that may be the crack initiation point of delayed fracture or fatigue fracture in the sheared edge 125 generated by shearing as well.

Furthermore, in the metal sheet shearing test system 1 according to the present second embodiment, it is possible to acquire the stress distribution history with high accuracy even during deformation of the sheared end caused by shearing of the test piece. Furthermore, it is possible to accurately and readily calculate the residual stress distribution generated in the metal sheet, even for shear deformation or the like followed by fracture of the metal sheet, which is difficult to predict by the finite element analysis.

In the metal sheet shearing test system 1 according to the present second embodiment, the residual stress distribution calculation unit 41 includes the residual stress distribution display section 41b that displays the global stress value obtained by converting the local stress in the material coordinate system at each measurement point into the stress value in the predetermined direction in the global coordinate system. However, the present invention is not limited to the residual stress distribution calculation unit 41 including the residual stress distribution display section 41b.

In addition, in the metal sheet shearing test system 1 according to the present second embodiment, the assumed incremental strain calculation section 39b calculates the assumed incremental strain on the basis of the mechanics of plasticity in the deformation state of the sheared end side surface 127 assumed from the deformation process of the sheared end 123 in the test piece 121. However, in the present invention, the assumed incremental strain calculation section may perform the finite element analysis in a process of plastic deformation of the metal sheet to assume the deformation state (e.g., the strain ratio) of the sheared end side surface 127 from a result of the finite element analysis.

When the deformation state of the sheared end side surface 127 is assumed by the finite element analysis of the deformation process caused by shearing of the metal sheet (the test piece) and the assumed incremental strain is calculated, the entire metal sheet does not need to be the analysis target as described above, and it is sufficient to model only the sheared end 123 and the vicinity thereof to perform the finite element analysis. This configuration enables assumption of the deformation state of the sheared end side surface 127 in a shorter time as compared with the finite element analysis for the entire metal sheet as the analysis target. Furthermore, it is also possible to use the solid element enabling calculation of the stress in the sheet thickness direction with high accuracy in the finite element analysis, and the residual stress distribution can be calculated with higher accuracy.

Measurement by the metal sheet shearing test method and the metal sheet shearing test system according to the present invention is not limited to measurement of the three-dimensional coordinates of each measurement point by DIC, and the metal sheet shearing test method and the metal sheet shearing test system only need to measure the three-dimensional coordinates of each measurement point at a predetermined time interval from the start to the end of deformation. In addition, the present invention may acquire the three-dimensional coordinates of each measurement point measured at the predetermined time interval, from the start to the end of deformation of the sheared end caused by shearing of the test piece, as the surface deformation history. As described above, the metal sheet shearing test method and the metal sheet shearing test system according to the present invention acquire the strain history and the spin history on the basis of the surface deformation history of the sheared end side surface of the test piece to calculate the residual stress distribution. Therefore, it is possible to accurately calculate the residual stress distribution even for a nonuniform metal sheet having two or more types of phases, which has been a problem in measurement of the residual stress using X-rays or supersonic waves as in the conventional art.

In addition, as described above, prediction of the residual stress distribution with high accuracy in the finite element analysis needs a considerable calculation time, or fracture such as cracking or shearing makes the analysis difficult. In particular, a metal sheet having been subjected to plastic deformation due to shearing is often broken from an end surface of the metal sheet, and therefore, it is important to accurately obtain the residual stress distribution of the end surface of the metal sheet in order to grasp the fatigue life/fatigue life time and delayed fracture characteristics. In contrast, the metal sheet shearing test method and the metal sheet shearing test system according to the present invention facilitate measurement of the strain history and the spin history of the sheared end side surface in the deformation process in which the sheared end is subjected to plastic deformation caused by shearing of the test piece, and therefore, the residual stress distribution in the sheared end side surface can be accurately calculated.

The above description has been made of calculation of the incremental stress using the Y-U model. However, in the Y-U model, a stress-strain curve is defined by using a velocity system, and therefore, for nonlinear deformation, the incremental stress may have an error if the incremental strain is not sufficiently reduced. Therefore, when the incremental stress is calculated using the Y-U model, it is preferable to adjust the time interval at which the three-dimensional coordinates of each measurement point are acquired as the surface deformation history so that the incremental strain is $10^{-6}$ or less. In addition, it is considered that the surface deformation history acquired in the present invention includes measurement noise, and there is a concern that the strain history and the spin history acquired from the surface deformation history including such measurement noise also include noise.

Therefore, when the incremental stress is calculated using minute incremental strain (the acquired incremental strain) calculated from the strain history, the noise of the strain history may significantly affect the incremental stress, and the accuracy of the stress sequentially calculated may be reduced. In such a case, it is preferable to smooth the strain history by using a low pass filter or the like for noise removal to calculate the residual stress distribution with high accuracy.

Furthermore, according to the present invention, it is possible to know not only the residual stress after the end of deformation, as in the conventional art, but also the stress during deformation at the sheared end of the sheared material. Therefore, it is possible to calculate maximum stress generated in the deformable body.

[Third Embodiment]

A manufacturing method for a sheared metal sheet material according to a third embodiment of the present invention is configured to manufacture a sheared material by shearing a metal sheet. As illustrated in FIG. 7, the manufacturing method for a sheared metal sheet material according to the present third embodiment includes a provisional shear condition setting process S41, a shearing reproduction test process S43, a tensile residual stress amount determination process S45, a provisional shear condition changing process S47, a repeating process S49, a shear condition determination process S51, and a shearing process S53. Each of the above processes will be described below.

<<Provisional shear condition setting process>>

The provisional shear condition setting process S41 is a process of setting a provisional shear condition for the sheared material. For the provisional shear conditions, for example, when the shearing tools 11 illustrated in FIG. 5 are used, a clearance d between the punch 13 and the die 15, an opening angle (shear angle) between the punch 13 and the die 15, a shear rate (relative movement speed between the punch 13 and the die 15), curvature radii of a cutting edge 13a of the punch 13 and a cutting edge 15a of the die 15, a cutting allowance, and the like may be set.

<<Shearing reproduction test process>>

In the shearing reproduction test process S43, shearing is performed on the test piece 121 under the provisional shear conditions set in the provisional shear condition setting process S41 by the metal sheet shearing test method according to the present first embodiment described above, for reproducing the process of forming the sheared end of the metal sheet. Then, the residual stress distribution in the sheared end side surface 127 is calculated on the basis of the surface deformation history of the sheared end side surface 127 formed in the test piece 121.

In the shearing reproduction test process S43, as illustrated in FIG. 6, stereo photography for the sheared end side surface 127 in the deformation process of the sheared end 123 caused by the shearing of the test piece 121 is preferably performed by the two cameras 29 to measure the three-dimensional coordinates of each measurement point set on the sheared end side surface 127 by DIC.

<<Tensile residual stress amount determination process>>

The tensile residual stress amount determination process S45 is a process of determining whether the tensile residual stress in the sheared end side surface 127 of the test piece 121 calculated in the shearing reproduction test process S43 is within a predetermined range determined in advance. In the tensile residual stress amount determination process S45, the tensile residual stress in the sheared end side surface 127 may have, for example, the maximum tensile residual stress (the maximum residual stress) in the residual stress distribution in the sheared end side surface 127. In addition, the predetermined range determined in advance means a range of tensile residual stress in which good hydrogen embrittlement property is obtained under a hydrogen-intrusion environment (e.g., immersion in ammonium thiocyanate of pH=4.0 and a concentration of 0.1% and McIlvaine buffer solution for 30 hours) for a test piece to which the tensile residual stress is applied.

<<Provisional shear condition changing process>>

The provisional shear condition changing process S47 is a process of changing the provisional shear conditions to relax the tensile residual stress when it is determined in the tensile residual stress amount determination process S45 that the tensile residual stress in the sheared end side surface 127 of the test piece 121 is out of the predetermined range determined in advance. Examples of the change of the provisional shear conditions include reducing the clearance between the punch 13 and the die 15, increasing the shear rate, and the like.

<<Repeating process>>

The repeating process S49 is a process of repeatedly executing the provisional shear condition changing process S47, the shearing reproduction test process S43, and the tensile residual stress amount determination process S45 until it is determined that the tensile residual stress in the sheared end side surface 127 is within the predetermined range determined in advance.

<<Shear condition determination process>>

The shear condition determination process S51 is a process of determining, as the shear conditions, the provisional shear conditions when it is determined that the tensile residual stress in the sheared end side surface 127 of the test piece 121 is within the predetermined range determined in advance in the tensile residual stress amount determination process S45.

<<Shearing process>>

The shearing process S53 is a process of shearing the metal sheet under the shear conditions determined in the shear condition determination process S51 to produce the sheared material.
In this way, according to the manufacturing method for a sheared metal sheet material according to the present third embodiment, the residual stress distribution in the sheared end side surface of the sheared end formed by shearing is obtained, enabling manufacture of the sheared metal sheet material for which appropriate measures are taken to suppress generation of the tensile residual stress affecting the fatigue life/fatigue life time or delayed fracture characteristics.

[First example]

Experiment that was performed for validation of the operations and effects of the present invention will be described below. In a first example, the strain from the start of shearing to the fracture of the test piece 121 was measured using DIC by the metal sheet shearing test method according to the first embodiment described above, and the residual stress distribution in the sheet thickness direction in the sheared end side surface 127 of the sheared end 123 formed by shearing of the test piece 121 was determined. Furthermore, at the center position in the sheet thickness direction of the test piece 121 subjected to the shearing, X-ray stress measurement was performed from the sheared edge 125 in a longitudinal direction of the test piece 121 (direction orthogonal to the sheared edge) (comparative example), for comparison with the residual stress in the sheared end side surface 127 calculated by the method according to the present invention.

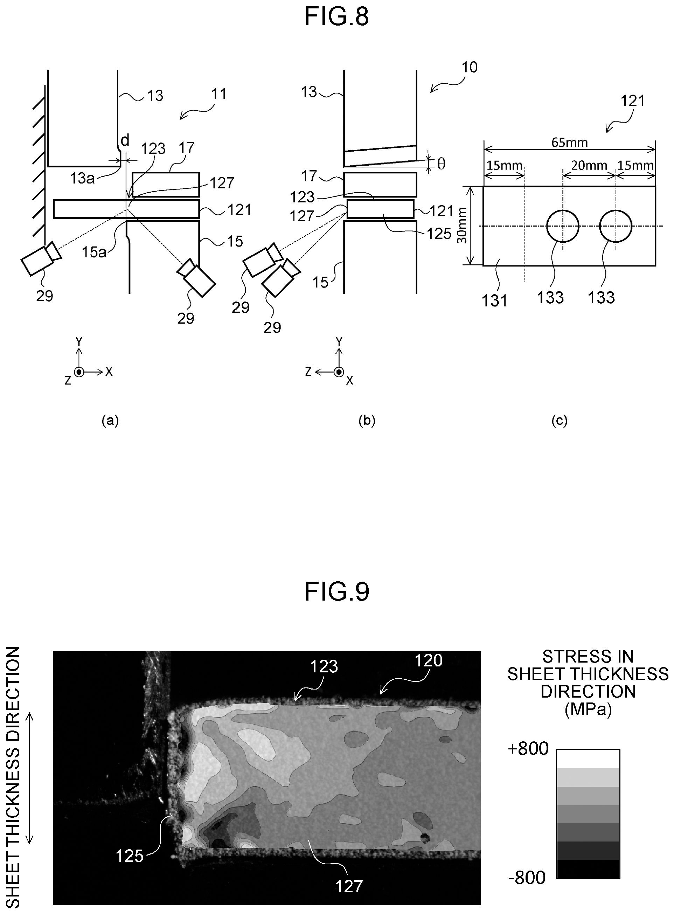

FIGS. 8(a) and 8(b) illustrate the shearing reproduction test apparatus 10 used in the first example. In FIG. 8, an X-axis direction is a direction orthogonal to the sheared edge, a Y-axis direction is a sheet thickness direction of the test piece 121, and a Z-axis direction is a direction orthogonal to the sheared end side surface 127.
The shearing device includes the shearing tools 11 having the punch 13, the die 15, and the holder 17. Furthermore, as illustrated in FIGS. 8(a) and 8(b), two cameras 29 and 29 were installed at positions where the sheared end side surface 127 of the sheared end 123 formed by shearing of the test piece 121 can be captured. Then, the plurality of measurement points were set on the sheared end side surface 127, and the three-dimensional coordinates of each of the measurement points were measured by DIC.
FIG. 8(c) illustrates a top view of the test piece 121. The test piece 121 was prepared from a high-strength steel sheet having a tensile strength of 1470 MPa class and a sheet thickness of 1.4 mm.
In the shear conditions for the test piece 121, the clearance d (see FIG. 8(a)) between the punch 13 and the die 15 was set to 20% of the sheet thickness (= 1.4 mm) of the test piece 121. In addition, the shear rate (relative speed between the punch 13 and the die 15) of the test piece 121 was set to 30 mm/min, a shear angle $\theta$ (see FIG. 8(b)), which is the opening angle between the punch 13 and the die 15, was set to 0°, the curvature radius (cutting edge R) of each of the cutting edge 13a of the punch 13 and the cutting edge 15a of the die 15 was set to 0.05 mm, and the cutting allowance of the test piece 121 (length of a portion of the test piece 121 protruding from above the die 15 toward the punch 13 in FIG. 8(a)) was set to 15 mm.

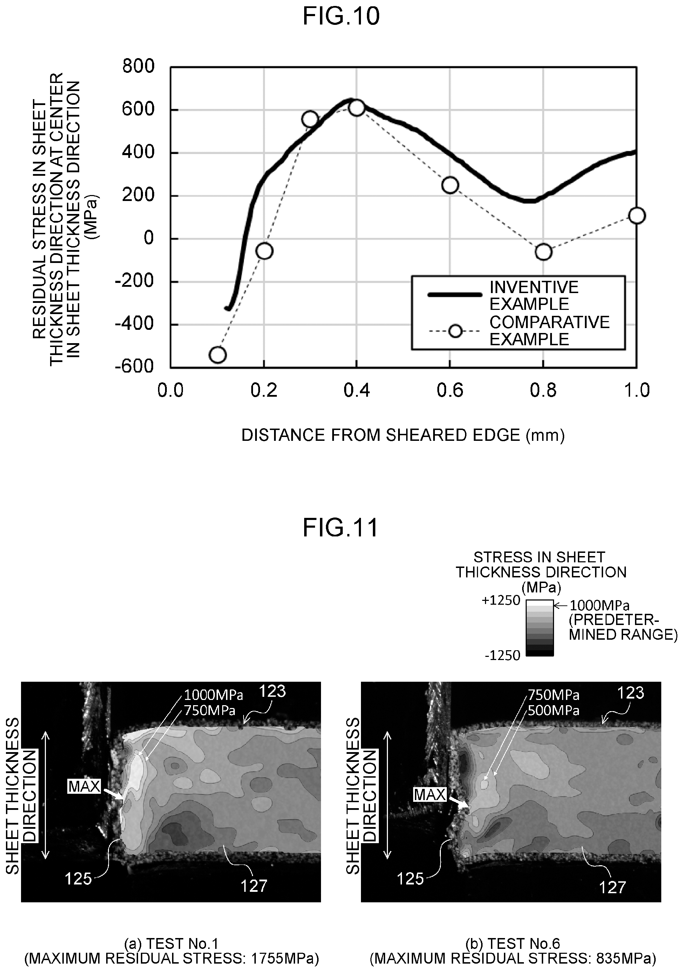

FIG. 9 illustrates the residual stress distribution in the sheet thickness direction in the sheared end side surface 127 of the sheared end 123 after fracture of the test piece 121 subjected to shearing. Residual stress of compression (negative and black) in the sheet thickness direction is confirmed to be inside by approximately several tens of micrometers from the sheared edge 125. In addition, residual stress of tension (positive and white) is generated in the sheet thickness direction, from the inside of the residual stress of compression to the vicinity of an upper surface of the test piece 121. FIG. 10 illustrates a comparison between the residual stress (inventive example) obtained from the residual stress distribution in the sheared end side surface 127 calculated by the method according to the first embodiment described above, and the residual stress (comparative example) measured by the X-ray diffraction method (XRD). In a graph illustrated in FIG. 10, a horizontal axis represents distance from the sheared edge in a direction orthogonal to the sheared edge 125, and a vertical axis represents the residual stress in the sheet thickness direction at the center in the sheet thickness direction.

The inventive example and the comparative example comparatively match each other, within a range of 0.1 to 0.4 mm from the sheared edge 125. Therefore, it was confirmed that estimation of the residual stress in the vicinity of the sheared edge, which is a problem of delayed fracture or the like, can be predicted by the present method. Divergence between the inventive example and the comparative example is a maximum of approximately 200 MPa at a distance of approximately 0.8 mm from the sheared edge. It suggests that this divergence is caused by measurement of compressive stress derived from a martensite phase of the 1470 MPa class steel plate in the X-ray diffraction method (XRD) according to the comparative example.

[Second example]

Next, in a second example, the shear conditions for restricting the tensile residual stress affecting the delayed fracture characteristics to the predetermined range were determined by the manufacturing method for a sheared metal sheet material according to the third embodiment of the present invention, and the sheared metal sheet material was manufactured.

In the second example, the shearing device (FIG. 8) used in the first example described above was used to measure the residual stress distribution in the sheared end side surface 127 of the sheared end 123 formed by shearing of the test piece 121. Then, the shear conditions were determined so that the residual stress distribution in the sheared end side surface 127 was equal to or less than a predetermined tensile residual stress, that is, the maximum tensile residual stress (the maximum residual stress) in the sheared end side surface 127 was equal to or less than the predetermined tensile residual stress, and the sheared material was produced.

The predetermined range of the tensile residual stress, as a criterion for determination of the residual stress in the sheared end side surface, in the tensile residual stress amount determination process was set to 1000 MPa or less obtained as a tensile stress range in which the delayed fracture does not occur in the hydrogen-intrusion environment (e.g., immersion in hydrochloric acid of pH = 4.0 and a concentration of 3.0% for 96 hours) in a state where a tensile stress (load stress) was applied to a four-point bend test piece by using a bending jig and a four-point bend test piece that are used for a four-point bend delayed fracture test (see, e.g., FIGS. 3 and 4 in JP 2014-0927 A).

Then, the test piece 121 illustrated in FIG. 8(c) was prepared from the steel sheet having a tensile strength of 1470 MPa class and a sheet thickness of 1.4 mm, which is the same as the metal sheet (blank) actually subjected to shearing. The test piece 121 having a cutting allowance 131 in shearing and a hole 133 through which the bolt passes to fix the test piece 121 by using the die 15 and the holder 17 was used.

Table 1 shows sheet thicknesses and tensile strengths of steel sheets used for the test pieces 121 in the second example, the shear conditions for the test pieces 121, and the like.

[Table 1]

| Test No. | Tensile strength | Sheet thickness (mm) | Shear rate (mm/min) | Clearance (%) | Shear angle (°) | Punch Cutting edge R (mm) | Die Cutting edge R (mm) | Cutting allowance (mm) | Maximum residual stress (MPa) | Predetermined range (1000MPa or less) |
|---|---|---|---|---|---|---|---|---|---|---|
| 1 | 1470MPa class | 1.4 | 30 | 20 | 0 | 0.05 | 0.05 | 15 | 1755 | No |
| 2 | 1470MPa class | 1.4 | 30 | 20 | 0 | 0.1 | 0.1 | 15 | 1548 | No |
| 3 | 1470MPa class | 1.4 | 30 | 20 | 1 | 0.05 | 0.05 | 15 | 1425 | No |
| 4 | 1470MPa class | 1.4 | 30 | 10 | 0 | 0.1 | 0.1 | 15 | 1284 | No |
| 5 | 1470MPa class | 1.4 | 30 | 10 | 1 | 0.05 | 0.05 | 15 | 1124 | No |
| 6 | 1470MPa class | 1.4 | 30 | 10 | 0 | 0.05 | 0.05 | 15 | 835 | Yes |
| 7 | 1470MPa class | 1.4 | 60 | 10 | 0 | 0.05 | 0.05 | 15 | 946 | Yes |
| 8 | 1470MPa class | 1.4 | 1 | 10 | 0 | 0.05 | 0.05 | 15 | 952 | Yes |
| 9 | 1470MPa class | 1.4 | 30 | 5 | 0 | 0.05 | 0.05 | 15 | 933 | Yes |
| 10 | 1470MPa class | 1.4 | 30 | 10 | 0 | 0.05 | 0.05 | 5 | 862 | Yes |
| 11 | 1470MPa class | 1.4 | 30 | 10 | 0 | 0.05 | 0.05 | 25 | 818 | Yes |
| 12 | 1470MPa class | 1.2 | 30 | 10 | 0 | 0.05 | 0.05 | 15 | 957 | Yes |
| 13 | 780MPa class | 2.0 | 30 | 10 | 0 | 0.05 | 0.05 | 15 | 991 | Yes |
| 14 | 590MPa class | 1.2 | 30 | 10 | 0 | 0.05 | 0.05 | 15 | 815 | Yes |

As the provisional shear conditions for the test piece 121, for the conditions of Test No. 1 in Table 1, the shear rate was set to 30 mm/min, the clearance d between the punch 13 and the die 15 was set to 20% of the sheet thickness, the shear angle θ was set to 0°, each of the cutting edge R of the punch 13 and the cutting edge R of the die 15 was set to 0.05 mm, and the cutting allowance 131 of the test piece 121 was set to 15 mm (the provisional shear condition setting process S41).

The test piece 121 was subjected to shearing under the provisional shear conditions to reproduce the process of forming the sheared end, and the surface deformation history of the sheared end side surface 127 was measured by capturing the DIC image of the sheared end side surface 127 by using two cameras 29 (FIG. 8). Then, the residual stress distribution in the sheet thickness direction in the sheared end side surface 127 was calculated on the basis of the measured surface deformation history of the sheared end side surface 127. The maximum residual stress in the sheared end side surface 127 at this time was 1755 MPa (the shearing reproduction test process S43).

FIG. 11(a) illustrates the residual stress distribution in the sheared end side surface 127 of the test piece 121 subjected to shearing under the provisional shear conditions (in the drawing, a portion indicated by an arrow is a portion having the maximum residual stress).

Then, the maximum residual stress of 1755 MPa in the sheared end side surface of the test piece was compared with the predetermined range (1000 MPa or less) where the delayed fracture does not occur, determined in advance by the four-point bend delayed fracture test, and was determined to be out of the range (the tensile residual stress amount determination process S45).

Therefore, the provisional shear conditions were changed from Test No. 1 to Test No. 2 in Table 1 so that the tensile residual stress in the sheared end side surface 127 of the test piece 121 was relaxed (the provisional shear condition changing process S47). Then, under the changed provisional shear conditions, the shearing reproduction test process S43 and the tensile residual stress amount determination process S45 were performed. The maximum residual stress in the sheared end side surface of the test piece subjected to shearing under the provisional shear conditions of Test No. 2 was 1548 MPa, and was out of the predetermined range where the delayed fracture does not occur.

Therefore, until the maximum residual stress in the sheared end side surface 127 is determined to be within a predetermined range (1000 MPa or less) where the delayed fracture does not occur, determined in advance by the four-point bend delayed fracture test, the provisional shear conditions (the clearance, the shear angle, the punch cutting edge, and the die cutting edge) were changed, as shown in Test No. 3 to Test No. 6 in Table 1, and the shearing reproduction test process S43 and the tensile residual stress amount determination process S45 were repeatedly executed (the repeating process S49).

Under the provisional shear conditions of Test No. 6, the maximum residual stress of the sheared end side surface 127 of the test piece 121 was 835 MPa, which was within the predetermined range (1000 MPa or less). Therefore, the provisional shear conditions of Test No. 6 were determined as the shear conditions for shearing the metal sheet (the shear condition determination process S51).

FIG. 11(b) illustrates the residual stress distribution in the sheared end side surface 127 of the test piece 121 subjected to shearing under the determined shear conditions (in the drawing, a portion indicated by an arrow is a portion representing the maximum residual stress).

As compared with shearing performed under the provisional shear conditions of Test No. 1 described above (FIG. 11(a)), it can be seen that a portion having a tensile residual force of 1000 MPa or more (white portion in the contour diagram) is not found in the sheared end side surface 127 deformed by shearing under the shear conditions of the Test No. 6. As a result, according to the shear conditions of Test No. 6, the sheared material can be manufactured so that the maximum residual stress in the sheared end side surface 127 satisfies the predetermined range, enabling suppression of the delayed fracture.

Test No. 6 was obtained by changing the shear angle θ among the shear conditions of Test No. 5, but as shown in Test No. 7 to Test No. 11 in Table 1, it was examined whether the maximum residual stress in the sheared end side surface 107 is within the predetermined range by changing other shear conditions. In Test No. 7 and Test No. 8, the shear rate was changed (30 mm/min to 60 mm/min or 1 mm/min), in Test No. 9, the clearance was changed (10% to 5%), and in Test No. 10 and Test No. 11, the cutting allowance was changed (15 mm to 5 mm or 25 mm).

Table 1 shows the shear conditions in Test No. 7 to Test No. 11 and the maximum residual stress obtained from the residual stress distribution in the sheared end side surface 127. In any of Test No. 7 to Test No. 11, it can be seen that the maximum residual stress in the sheared end side surface 127 is within the predetermined range (1000 MPa or less) where the delayed fracture does not occur, determined in advance by the four-point bend delayed fracture test. From this, it can be seen that even when the shear conditions other than the shear angle are changed, the shear conditions can be determined so that the maximum residual stress in the sheared end side surface 127 is within the predetermined range.

Furthermore, as shown in Test No. 12 to Test No. 14 in Table 1, even when the tensile strength and the sheet thickness of the steel sheet were changed from those in Test No. 1 to Test No. 11, the shear conditions were determined so that the maximum residual stress in the sheared end side surface 127 is within the predetermined range. In Test No. 12, the sheet thickness of the steel sheet was changed to 1.2 mm, in Test No. 13, the sheet thickness of the steel sheet was changed to 2.0 mm and the tensile strength was changed to 780 MPa class, and in Test No. 14, the sheet thickness of the steel sheet was changed to 1.2 mm and the tensile strength was changed to 590 MPa class.

Table 1 shows the maximum residual stress obtained from the residual stress distribution in the sheared end side surface 127, for each of Test No. 12 to Test No. 14. Even when the tensile strength and the sheet thickness of the steel sheet are different, it can be seen that the maximum residual stress in the sheared end side surface 127 is within the predetermined range where delayed fracture does not occur. From this, it can be seen that the shear conditions can be determined so that the maximum residual stress in the sheared end side surface is within the predetermined range regardless of the tensile strength and the sheet thickness of the steel sheet.

As described above, according to the manufacturing method for a sheared metal sheet material of the third embodiment of the present invention, it was shown that it is possible to manufacture the sheared metal sheet material for which appropriate measures are taken to suppress generation of the tensile residual stress affecting the delayed fracture characteristics are appropriately taken.

Industrial Applicability

According to the present invention, it is possible to provide the metal sheet shearing test method and the metal sheet shearing test system that are configured to reproduce shearing of the metal sheet to accurately and readily obtain the residual stress in the sheared end formed in the test piece. Furthermore, according to the present invention, it is possible to provide the manufacturing method for a sheared metal sheet material for which appropriate measures are taken to suppress occurrence of the tensile residual stress affecting the fatigue life/fatigue life time or the delayed fracture characteristics.

Reference Signs List

| | |
|---|---|
| 1 | SHEARING TEST SYSTEM |
| 10 | SHEARING REPRODUCTION TEST APPARATUS |
| 11 | SHEARING TOOLS |
| 13 | PUNCH |
| 13a | CUTTING EDGE |
| 15 | DIE |
| 15a | CUTTING EDGE |
| 17 | HOLDER |
| 20 | RESIDUAL STRESS DISTRIBUTION CALCULATION DEVICE |
| 21 | DISPLAY DEVICE |
| 23 | INPUT DEVICE |
| 25 | MAIN STORAGE DEVICE |
| 27 | AUXILIARY STORAGE DEVICE |
| 29 | CAMERA |
| 31 | MEASUREMENT CONTROL/CALCULATION PROCESSING SECTION |
| 33 | MEASUREMENT CONTROL SECTION |

| 33a | IMAGE CAPTURE MEANS |
|---|---|
| 33b | THREE-DIMENSIONAL COORDINATE CALCULATING MEANS |
| 35 | CALCULATION PROCESSING SECTION |
| 37 | DEFORMATION HISTORY ACQUISITION UNIT |
| 37a | SURFACE DEFORMATION HISTORY ACQUISITION SECTION |
| 37b | STRAIN HISTORY ACQUISITION SECTION |
| 37c | SPIN HISTORY ACQUISITION SECTION |
| 39 | STRESS INCREMENTAL UPDATE UNIT |
| 39a | ACQUIRED INCREMENTAL STRAIN CALCULATION SECTION |
| 39b | ASSUMED INCREMENTAL STRAIN CALCULATION SECTION |
| 39c | ACQUIRED INCREMENTAL SPIN CALCULATION SECTION |
| 39d | INCREMENTAL STRESS CALCULATION SECTION |
| 39e | STRESS INCREMENTAL UPDATE SECTION |
| 41 | RESIDUAL STRESS DISTRIBUTION CALCULATION UNIT |
| 41a | STRESS COORDINATE SYSTEM TRANSFORMATION SECTION |
| 41b | RESIDUAL STRESS DISTRIBUTION DISPLAY SECTION |
| 100 | METAL SHEET |
| 101 | SHEARED MATERIAL |
| 103 | SHEARED END |
| 105 | SHEARED EDGE |
| 107 | SHEARED END SIDE SURFACE |
| 109 | SHEET SIDE SURFACE |
| 110 | SHEARING BLADE |
| 111 | SCRAP MATERIAL |
| 121 | TEST PIECE |
| 123 | SHEARED END |
| 125 | SHEARED EDGE |
| 127 | SHEARED END SIDE SURFACE |
| 129 | SHEET SIDE SURFACE |

129a SHEET SIDE SURFACE (MEASUREMENT RANGE BY DIC)

131 CUTTING ALLOWANCE

133 HOLE

**Claims**

1. A metal sheet shearing test method for calculating residual stress in a sheared end of a sheared material obtained by shearing a metal sheet, the method comprising:

a shearing reproduction test procedure of reproducing a process of forming the sheared end by shearing of a test piece using the metal sheet as a test material; and
a residual stress distribution calculation procedure of calculating a residual stress distribution in a sheared end side surface of the sheared end formed in the test piece,
wherein the shearing reproduction test procedure includes shearing the test piece, using shearing tools including a punch, a die, and a holder, by relatively moving the punch and the die in a state where the test piece is arranged between the die and the holder, and
the residual stress distribution calculation procedure includes

a deformation history acquisition process,
a stress incremental update process, and
a residual stress distribution calculation process,

wherein the deformation history acquisition process includes:

a surface deformation history acquisition step of setting a plurality of measurement points on the sheared end side surface of the sheared end formed in the test piece, measuring three-dimensional coordinates of each of the plurality of measurement points in a deformation process of the sheared end caused by shearing of the test piece in the shearing reproduction test procedure, and acquiring a surface deformation history of the sheared end side surface from start to end of deformation of the sheared end;
a strain history acquisition step of acquiring a strain history of the sheared end side surface in a deformation process of the sheared end, from the acquired surface deformation history of the sheared end side surface; and
a spin history acquisition step of acquiring a spin history of the sheared end side surface in the deformation process of the sheared end, from the acquired surface deformation history of the sheared end side surface,

the stress incremental update process includes:

an acquired incremental strain calculation step of calculating acquired incremental strain from the strain history of the sheared end side surface acquired in the strain history acquisition step;
an assumed incremental strain calculation step of calculating assumed incremental strain, assuming a deformation state of the sheared end side surface, the assumed incremental strain being an increment of strain other than the strain for which the strain history is acquired in the strain history acquisition step;
an acquired incremental spin calculation step of calculating acquired incremental spin from the spin history acquired in the spin history acquisition step; and
an incremental stress calculation step of calculating incremental stress at the plurality of measurement points according to a material constitutive law by using the acquired incremental strain, the assumed incremental strain, and the acquired incremental spin; and
a stress incremental update step of performing incremental update of stress in a material coordinate system at each of the plurality of measurement points, from the start to the end of deformation of the sheared end caused by shearing of the test piece, by using the incremental stress calculated for each of the plurality of measurement points, and

the residual stress distribution calculation process includes:
a stress coordinate system transformation step of converting the stress in the material coordinate system at each of the plurality of measurement points at the end of deformation of the sheared end obtained by incremental update in the stress incremental update step, into a global stress value in a predetermined direction in a global coordinate system, and obtaining the converted global stress value at each of the plurality of measurement points, as the residual stress distribution in the sheared end side surface.

2. The metal sheet shearing test method according to claim 1, wherein the residual stress distribution calculation process further includes a residual stress distribution display step of displaying the residual stress distribution in the sheared end side surface obtained in the stress coordinate system transformation step.

3. The metal sheet shearing test method according to claim 1 or 2, wherein in the assumed incremental strain calculation step, a deformation state of the sheared end side surface is assumed from a deformation process of the sheared end caused by shearing of the test piece, and the assumed incremental strain in the sheared end side surface is calculated based on mechanics of plasticity in the assumed deformation state.

4. The metal sheet shearing test method according to claim 1 or 2, wherein in the assumed incremental strain calculation step, a deformation state of the sheared end side surface is assumed by a finite element analysis of a deformation process of the sheared end caused by shearing of the test piece, and the assumed incremental strain in the sheared end side surface is calculated based on the assumed deformation state.

5. A metal sheet shearing test system for calculating residual stress in a sheared end of a sheared material obtained by shearing a metal sheet, the system comprising:

a shearing reproduction test apparatus configured to reproduce a process of forming the sheared end by shearing of a test piece using the metal sheet as a test material; and
a residual stress distribution calculation device configured to calculate a residual stress distribution in a sheared end side surface of the sheared end formed in the test piece,
wherein the shearing reproduction test apparatus includes shearing tools including a punch, a die, and a holder to relatively move the punch and the die in a state where the test piece is arranged between the die and the holder, the shearing reproduction test apparatus being configured to perform shearing of the test piece, and
the residual stress distribution calculation device includes a deformation history acquisition unit, a stress incremental update unit, and a residual stress distribution calculation unit,
wherein the deformation history acquisition unit includes:

a surface deformation history acquisition section configured to measure three-dimensional coordinates in a deformation process of the sheared end caused by shearing of the test piece using the shearing reproduction test apparatus, for a plurality of measurement points set on the sheared end side surface of the sheared end formed in the test piece, and acquires a surface deformation history of the sheared end side surface from start to end of deformation of the sheared end;
a strain history acquisition section configured to acquire a strain history of the sheared end side surface in a deformation process of the sheared end, from the acquired surface deformation history of the sheared end side surface; and
a spin history acquisition section configured to acquire a spin history of the sheared end side surface in the deformation process of the sheared end, from the acquired surface deformation history of the sheared end side surface,

the stress incremental update unit includes:

an acquired incremental strain calculation section configured to calculate acquired incremental strain from the strain history of the sheared end side surface acquired by the strain history acquisition section;
an assumed incremental strain calculation section configured to calculate assumed incremental strain, assuming a deformation state of the sheared end side surface, the assumed incremental strain being an increment of strain other than the strain for which the strain history is acquired by the strain history acquisition section;
an acquired incremental spin calculation section configured to calculate acquired incremental spin from the spin history acquired by the spin history acquisition section; and
an incremental stress calculation section configured to calculate incremental stress at each of the plurality of measurement points according to a material constitutive law by using the acquired incremental strain, the assumed incremental strain, and the acquired incremental spin; and
a stress incremental update section configured to perform incremental update of stress in a material coordinate system at each of the plurality of measurement points, from the start to the end of deformation of the sheared end caused by shearing of the test piece, by using the incremental stress calculated for each of the plurality of measurement points, and

the residual stress distribution calculation unit includes:
a stress coordinate system transformation section configured to convert the stress in the material coordinate system at each of the plurality of measurement points at the end of deformation of the sheared end obtained by incremental update by the stress incremental update section, into a global stress value in a predetermined direction in a global coordinate system, and obtains the converted global stress value at each of the plurality of measurement points, as the residual stress distribution in the sheared end side surface.

6. The metal sheet shearing test system according to claim 5, wherein the residual stress distribution calculation unit further includes a residual stress distribution display section configured to display the residual stress distribution in the sheared end side surface obtained by the stress coordinate system transformation section.

7. The metal sheet shearing test system according to claim 5 or 6, wherein the assumed incremental strain calculation section is configured to assume a deformation state of the sheared end side surface from a deformation process of the sheared end caused by shearing of the test piece, and calculate the assumed incremental strain in the sheared end side surface based on mechanics of plasticity in the assumed deformation state.

8. The metal sheet shearing test system according to claim 5 or 6, wherein the assumed incremental strain calculation section is configured to assume a deformation state of the sheared end side surface by a finite element analysis of a deformation process of the sheared end caused by shearing of the test piece, and calculate the assumed incremental strain in the sheared end side surface based on the assumed deformation state.

9. A manufacturing method for a sheared metal sheet material, the method performing shearing of a metal sheet to manufacture a sheared material and comprising:

a provisional shear condition setting process of setting a provisional shear condition for performing shearing of the metal sheet;
a shearing reproduction test process of reproducing a process of forming a sheared end of the metal sheet by performing shearing of a test piece under the provisional shear condition by the metal sheet shearing test method according to claim 1 or 2, and calculating a residual stress distribution in a sheared end side surface based on a surface deformation history of the sheared end side surface of the sheared end formed in the test piece;
a tensile residual stress amount determination process of determining whether tensile residual stress in the sheared end side surface is within a predetermined range determined in advance;
a provisional shear condition changing process of changing the provisional shear condition when it is determined that the tensile residual stress is out of the predetermined range determined in advance;
a repeating process of repeatedly executing the provisional shear condition changing process, the shearing reproduction test process, and the tensile residual stress amount determination process until it is determined that the tensile residual stress is within the predetermined range determined in advance;
a shear condition determination process of determining, when it is determined that the tensile residual stress is within the predetermined range determined in advance in the tensile residual stress amount determination process, the determined provisional shear condition, as a shear condition; and
a shearing process of performing shearing of the metal sheet under the determined shear condition.

# FIG.1

(a)

```
        START
          │
          ▼
SHEARING REPRODUCTION TEST PROCEDURE          ─── P1
          │
          ▼
RESIDUAL STRESS DISTRIBUTION CALCULATION PROCEDURE   ─── P3
          │
          ▼
         END
```

(b)

RESIDUAL STRESS DISTRIBUTION CALCULATION PROCEDURE ─── P3

DEFORMATION HISTORY ACQUISITION PROCESS ─── S10

SURFACE DEFORMATION HISTORY ACQUISITION STEP ─── S11

STRAIN HISTORY ACQUISITION STEP ─── S13

SPIN HISTORY ACQUISITION STEP ─── S15

STRESS INCREMENTAL UPDATE PROCESS ─── S20

ACQUIRED INCREMENTAL STRAIN CALCULATION STEP ─── S21

ASSUMED INCREMENTAL STRAIN CALCULATION STEP ─── S23

ACQUIRED INCREMENTAL SPIN CALCULATION STEP ─── S25

INCREMENTAL STRESS CALCULATION STEP ─── S27

STRESS INCREMENTAL UPDATE STEP ─── S29

UPDATE LOCAL STRESS ─── S29a

NO — FINISH OF STRESS UPDATE AT ALL MEASUREMENT POINTS ─── S29b

YES

NO — FINISH OF DEFORMATION ─── S29c

YES

RESIDUAL STRESS DISTRIBUTION CALCULATION PROCESS ─── S30

STRESS COORDINATE SYSTEM TRANSFORMATION STEP ─── S31

RESIDUAL STRESS DISTRIBUTION DISPLAY STEP ─── S33

# FIG.2

# FIG.3

(a)

(b)

RESIDUAL STRESS
MEASUREMENT POSITION
(CENTER IN SHEET
THICKNESS DIRECTION)

MAXIMUM RESIDUAL
STRESS IN SHEARED
END SIDE SURFACE (MPa)

RESIDUAL STRESS IN
SHEARED EDGE BY
XRD (MPa)

# FIG.4

(a) BEFORE SHEARING

100,121

y

↑

└→x

GLOBAL COORDINATE
SYSTEM

MATERIAL COORDINATE SYSTEM

(b) AFTER SHEARING

103,123    101    100, 121

111

y

↑

└→x

GLOBAL COORDINATE
SYSTEM

# FIG.5

1

20

10

13

11

d

17

13a

121

15a

15

29

29

| MEASUREMENT CONTROL/CALCULATION PROCESSING SECTION | ~31 |
|---|---|
| MEASUREMENT CONTROL SECTION | ~33 |
| IMAGE CAPTURE MEANS | ~33a |
| THREE-DIMENSIONAL COORDINATE CALCULATING MEANS | ~33b |
| CALCULATION PROCESSING SECTION | ~35 |
| DEFORMATION HISTORY ACQUISITION UNIT | ~37 |
| SURFACE DEFORMATION HISTORY ACQUISITION SECTION | ~37a |
| STRAIN HISTORY ACQUISITION SECTION | ~37b |
| SPIN HISTORY ACQUISITION SECTION | ~37c |
| STRESS INCREMENTAL UPDATE UNIT | ~39 |
| ACQUIRED INCREMENTAL STRAIN CALCULATION SECTION | ~39a |
| ASSUMED INCREMENTAL STRAIN CALCULATION SECTION | ~39b |
| ACQUIRED INCREMENTAL SPIN CALCULATION SECTION | ~39c |
| INCREMENTAL STRESS CALCULATION SECTION | ~39d |
| STRESS INCREMENTAL UPDATE SECTION | ~39e |
| RESIDUAL STRESS DISTRIBUTION CALCULATION UNIT | ~41 |
| STRESS COORDINATE SYSTEM TRANSFORMATION SECTION | ~41a |
| RESIDUAL STRESS DISTRIBUTION DISPLAY SECTION | ~41b |

DISPLAY DEVICE ~21

INPUT DEVICE ~23

MAIN STORAGE DEVICE ~25

AUXILIARY STORAGE
DEVICE ~27

# FIG.6

(a) BEFORE DEFORMATION          (b) AFTER DEFORMATION

# FIG.7

# FIG.8

(a)

(b)

(c)

# FIG.9

STRESS IN
SHEET THICKNESS
DIRECTION
(MPa)

+800

−800

## FIG.10

## FIG.11

(a) TEST No.1
(MAXIMUM RESIDUAL STRESS: 1755MPa)

(b) TEST No.6
(MAXIMUM RESIDUAL STRESS: 835MPa)

## INTERNATIONAL SEARCH REPORT

| International application No. |
| --- |
| **PCT/JP2024/027734** |

| A. | CLASSIFICATION OF SUBJECT MATTER |
| --- | --- |

*G01L 1/00*(2006.01)i
FI:  G01L1/00 M

According to International Patent Classification (IPC) or to both national classification and IPC

| B. | FIELDS SEARCHED |
| --- | --- |

Minimum documentation searched (classification system followed by classification symbols)

    G01L1/00-5/28; G06F30/00-30/398

Documentation searched other than minimum documentation to the extent that such documents are included in the fields searched

    Published examined utility model applications of Japan 1922-1996
    Published unexamined utility model applications of Japan 1971-2024
    Registered utility model specifications of Japan 1996-2024
    Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 6981521 B1 (JFE STEEL CORPORATION) 15 December 2021 (2021-12-15)<br>    entire text, all drawings | 1-9 |
| A | JP 2013-36787 A (TOYOTA JIDOSHA KABUSHIKI KAISHA) 21 February 2013 (2013-02-21)<br>    entire text, all drawings | 1-9 |
| A | NETO, EA de Souza et al., 寺田賢二郎 監訳, 非線形有限要素法 第1版<br>COMPUTATIONAL METHODS FOR PLASTICITY, 森北出版株式会社, pp. 623-705<br>(translated into Japanese by TERADA, K., Morikita Publishing)<br>    chapter 14: Finite strain elasticity, entire text, all drawings | 1-9 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **30 September 2024** | **08 October 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/027734**

| Patent document cited in search report | | | Publication date (day/month/year) | Patent family member(s) | | | Publication date (day/month/year) |
|---|---|---|---|---|---|---|---|
| JP | 6981521 | B1 | 15 December 2021 | US | 2024/0027314 | A1 | |
| | | | | entire text, all drawings | | | |
| | | | | WO | 2022/123825 | A1 | |
| | | | | EP | 4257944 | A1 | |
| | | | | CN | 116569011 | A | |
| | | | | KR | 10-2023-0112720 | A | |
| JP | 2013-36787 | A | 21 February 2013 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002333409 A
- JP 2011196953 A
- JP 6981521 B
- JP 2014000927 A

**Non-patent literature cited in the description**

- **F. YOSHIDA** ; **T. UEMORI**. *International Journal of Mechanical Sciences*, 2003, vol. 45, 1687-1702
- **F. X. C. ANDRADE** ; **M. FEUCHT** ; **A. HAUFE** ; **F. NEUKAMM**. *International Journal of Fracture*, 2016, vol. 200, 127-150